# FASCICULE DE BREVET EUROPEEN

(11) **EP 1 003 802 B1**
(45) Date de publication et mention de la délivrance du brevet: **22.12.2004**
(21) Numéro de dépôt: 98942735.6
(22) Date de dépôt: 12.08.1998
(51) Int. Cl.: C08G 18/79, C08G 18/32, C08G 18/42, C08G 18/62

(54) **PROCEDE DE PREPARATION DE COMPOSITIONS (POLY)ISOCYANATES DE VISCOSITE REDUITE**
VERFAHREN ZUR HERSTELLUNG EINER POLYISOCYANAT-ZUSAMMENSETZUNG MIT VERRINGERTER VISKOSITÄT
METHOD FOR PREPARING (POLY)ISOCYANATE COMPOSITION WITH REDUCED VISCOSITY

(30) Priorité: 12.08.1997 FR 9710296; 29.05.1998 FR 9806849
(43) Date de publication de la demande: 31.05.2000
(60) Demande divisionnaire: 04014335.6
(73) Titulaire: RHODIA CHIMIE, 92408 Courbevoie Cédex (FR)
(72) Inventeur: CHARRIERE, Eugénie, F-69000 Lyon (FR); BERNARD, Jean-Marie, F-69440 Mornant (FR); REVELANT, Denis, F-69740 Genas (FR); RANDU, Stéphane, F-69007 Lyon (FR); CARLO, Michel, F-69008 Lyon (FR)
(74) Mandataire: Jacobson, Claude
(86) Numéro de dépôt international: PCT/FR1998/001800
(87) Numéro de publication internationale: WO 1999/007765

(56) Documents cités:
- EP-A- 0 481 318
- EP-A- 0 615 993
- EP-A- 0 780 417
- US-A- 5 461 135

## Description

La présente invention concerne la preparation dnsocyanates polyfonctionnels ayant une viscosité réduite, à partir de monomères de départ.

Ces produits intéressent tout particulièrement l'industrie des peintures et revêtements et sont particulièrement avantageux d'un point de vue écologique.

Il est connu d'employer des isocyanates polyfonctionnels, pour la préparation de polymères réticulés, notamment de polyuréthanes, par polymérisation et/ou polyaddition avec des composés à hydrogène réactif, notamment de polyols.

A cet effet, on préfère généralement employer des compositions d'isocyanates polyfonctionnels comprenant une proportion importante d'isocyanates polyfonctionnels tricondensats (IPT), c'est-à-dire d'isocyanates obtenus par (cyclo)trimérisation de trois molécules monomères de départ, à savoir des isocyanates notamment des diisocyanates et éventuellement d'autres composés réactifs avec un isocyanate tels qu'une amine, en présence d'eau.

Parmi les IPT, on peut citer en particulier les (poly)isocyanates isocyanurates obtenus par cyclotrimérisation de trois molécules d'isocyanates, avantageusement de diisocyanates, ou les (poly)isocyanates à motif biuret obtenus par un procédé de biurétisation tel que la trimérisation avec trois molécules d'isocyanates, en présence d'eau et un catalyseur tel que décrit dans FR 2 603 278.

Pour obtenir des compositions d'isocyanates comprenant des proportions élevées d'IPT, on arrête généralement la réaction de polymérisation des monomères de départ, laquelle a lieu généralement en présence d'un catalyseur approprié, lorsqu'un taux de transformation de 20 à 40 % des monomères de départ est obtenu, ceci afin d'éviter que la quantité d'oligomères ayant plus de trois motifs monomères de départ formée dans le milieu réactionnel ne soit trop importante.

Le milieu réactionnel en fin de polycondensation ainsi obtenu contient donc en général une quantité majoritaire de monomères et une quantité minoritaire d'oligomères, la fraction oligomère étant constituée majoritairement de trimères et en quantité plus réduite de tétramères, pentamères et composés lourds, ainsi que de dimères en quantité faible.

A la fin de la réaction, le mélange réactionnel est distillé afin d'éliminer les monomères qui sont des composés organiques volatils, et pour certains d'entre eux toxiques.

Un inconvénient important des compositions obtenues de cette manière réside toutefois en ce que la composition obtenue à l'issue de l'étape de distillation présente une viscosité relativement élevée, difficilement compatible avec l'usage ultérieur de ces compositions pour les fabrications de revêtements.

Ainsi, en l'absence de solvant, une composition obtenue par cyclotrimérisation d'hexaméthylène diisocyanate (HDI) présente en général après distillation de la fraction monomère une viscosité variant de 1200 à 2400 mPa.s pour un taux de transformation des monomères de départ variant de 20 à 40 %.

Ce problème est encore plus aigu pour les biurets qui pour le même monomère présentent après distillation une viscosité de l'ordre de 9000 mPa.s.

L'une des solutions préconisées pour abaisser la viscosité de ces compositions est d'ajouter des solvants organiques.

Cependant, la pression environnementale et les réglementations ont poussé les fabricants de peinture à diminuer les quantités de solvants volatils dans les peintures.

On a donc cherché à introduire des solvants dits réactifs qui s'incorporent au réseau de film de revêtement.

Ainsi, on a utilisé des oligomères d'isocyanates de basse viscosité comme diluants réactifs. On peut citer à ce titre les dimères de diisocyanates encore appelés uretidine diones (uretdiones). Un exemple particulier est constitué par le dimère à cycle uretidine dione obtenu par dimérisation catalysée de l'hexaméthylènediisocyanate (HDI) qui est utilisé comme diluant réactif des polyisocyanates, tel que décrit dans la présentation de Wojcik R.P., Goldstein S.L., Malofsky A.G., Barnowfki, H.G., Chandallia K.R. au 20^{ème} congrès "Proceedings Water borne, Higher Solids and Powder Coatings Symposium", 1993 (p 26-48) ou encore les présentations de U. Wustmann, P. Ardaud et E. Perroud au 4^{ème} congrès de Nuremberg "Creative Advances Coatings Technology", avril 1997, présentation n° 44.

Pour obtenir des compositions d'isocyanates polyfonctionnels de viscosité abaissée, on ajoute généralement le dimère à la composition isocyanate issue de la polymérisation, notamment de la (cyclo)trimérisation des monomères de départ, ce qui nécessite le recours à deux procédés de préparation, l'un spécifique à la préparation des composés dimères, l'autre spécifique à la préparation des IPT, entraînant deux processus de distillation des mélanges réactionnels résultant afin d'éliminer les monomères de départ.

Des procédés de préparation de dimères sont connus de l'état de la technique, on se reportera notamment à l'article de W. Schapp dans "Methoden der Organischen Chemie", Houben Weyl, 1903, p. 1102-1111 pour les détails des différents modes de préparation.

On a jusqu'à présent eu recours à des catalyseurs pour réaliser la synthèse de dimères d'isocyanates, notamment d'isocyanates aliphatiques.

Les catalyseurs généralement utilisés à cet effet sont des dérivés de phosphines, d'aminopyridines, éventuellement supportés sur des composés minéraux, tels l'alumine ou la silice, décrits dans US 5,461,020, des dérivés organométalliques ou encore de type amine tertiaire, notamment des poly-dialkoylaminopyridines telles que décrites dans US 5,315,004 et WO93/19049.

Il est également connu d'utiliser des mélanges de différents catalyseurs.

Un inconvénient de l'utilisation des catalyseurs de dimérisation est que ceux-ci confèrent au produit dimère une coloration préjudiciable à l'utilisation ultérieure des compositions d'isocyanates polyfonctionnels, notamment dans des peintures.

Pour combattre cette coloration, il est recouru à des agents de décoloration, tels que des peroxydes.

Un autre inconvénient majeur des procédés connus de synthèse du dimère réside dans l'impossibilité d'obtenir un taux de transformation complet des monomères de départ. En effet, la réaction de dimérisation n'étant pas sélective, les isocyanates monomères de départ ont tendance à homopolymériser, et à fournir des produits de poids moléculaire plus élevé entraînant une augmentation de la viscosité.

Il est donc habituel de limiter le taux de transformation de l'isocyanate de départ afin de ne pas dépasser un taux de 50 %, voire 35 %, ceci pour éviter la formation de composés visqueux, voire solides qui ne pourraient plus jouer leur rôle de diluant des IPT.

Un problème supplémentaire dans la préparation des isocyanates dimères tient également à la séparation de ceux-ci d'avec les monomères.

En effet, à la fin de la réaction de dimérisation, il y a lieu d'éliminer les isocyanates monomères en excès. Cette opération est réalisée par volatilisation ou distillation sous vide. Le dimère alors obtenu est un composé peu visqueux de 100 mPa.s à 25°C.

Toutefois, le dimère ainsi obtenu n'est pas stable dans le temps même à température ambiante. Le produit dimère se redissocie en effet en monomères jusqu'à formation d'un équilibre entre la forme dimère et la forme monomère. Cet effet est par ailleurs favorisé par la température. Ce problème est particulièrement prononcé lorsque le dimère est pur.

Or, l'industrie des peintures polyuréthannes exige des polyisocyanates avec des teneurs en monomères isocyanates très faibles, inférieures à 0,5 % en poids.

Il serait par conséquent nécessaire de distiller à intervalles réguliers le dimère pour éliminer les monomères en excès, ce qui occasionne des coûts supplémentaires et une perte de productivité.

Le but de l'invention est par conséquent de fournir un procédé de préparation d'isocyanates dimères qui présentent une viscosité réduite, soit stables au cours du temps et ne présentent pas de coloration néfaste (nombre d'Hazen inférieur à 100, avantageusement inférieur à 50) ni de traces de catalyseur.

En particulier, les dimères contiendront moins de 1‰, de préférence moins de 1000 ppm, plus préférentiellement moins de 100 ppm en masse de phosphore catalytique (directement ou après destruction du catalyseur) de nature phosphinique ou sous sa forme inactivée (oxyde de phosphine, sels de phosphonium).

Toutefois, la composition contenant le dimère peut comprendre des composés phosphorés de type tensio-actifs n'ayant pas d'activité catalytique vis à vis de la dimérisation, notamment des phosphates, phosphinates, phosphonates, en particulier ceux décrits dans EP 0 815 153.

Les dimères contiendront également moins de 5 meq, avantageusement moins de 1 meq, plus préférentiellement moins de 0,5 meq de fonctions aminopyridine ou alkylaminopyridine pour 100 g d'oligomères dérivés de l'isocyanate de départ.

Avantageusement, les compositions selon l'invention ne comprennent pas des quantités mesurables (par les moyens de mesure habituels) de catalyseurs.

Les travaux des inventeurs ont à présent permis de mettre au point un procédé permettant d'éviter les inconvénients de l'état de la technique et d'obtenir des compositions dimères stables ne présentant pas de coloration.

L'invention a ainsi pour objet un procédé de préparation d'une composition comprenant au moins un isocyanate dimère à motif urétidine-dione à partir d'isocyanates monomères de départ dans lesquels les fonctions isocyanates sont portées par des atomes de carbone sp³, caractérisé en ce que l'on chauffe le milieu réactionnel de départ, en l'absence de catalyseur de dimérisation, à une température d'au moins 50°C et n'excédant pas 200°C pendant une durée n'excédant pas 24 heures, jusqu'à obtention d'un taux de dimères d'au moins 1 %, de préférence 2 %, en poids, par rapport aux monomères de départ.

Par "absence de catalyseur de dimérisation", on entend notamment que la réaction est effectuée en l'absence de composés de type phosphine, aminopyridine, phosphoramide, (notamment hexaméthyl phosphoramide), organométallique et amine tertiaire.

Avantageusement, la température de chauffage est d'au moins 80°C, de préférence d'au moins 120°C et d'au plus 170°C.

La température de chauffage dépend de la nature des isocyanates monomères de départ.

Lorsque les monomères de départ sont de nature aliphatique, la température de chauffage se situe dans le domaine supérieur de la plage définie ci-dessus, alors que lorsque les monomères de départ sont de nature aromatique, la température de chauffage peut être ramenée dans le domaine inférieur de cette plage.

Ainsi pour obtenir des dimères d'isocyanates aliphatiques, on chauffera le milieu réactionnel à une température supérieure à 100°C, avantageusement supérieure à 120°C, de préférence supérieure à 130°C et plus préférentiellement supérieure à 140°C, pour des durée inférieures à 12 heures, avantageusement inférieures à 8 heures et avantageusement supérieures à 30 minutes.

De manière générale les isocyanates monomères de départ que l'on cherche à dimériser consistent en tous types d'isocyanates, qu'ils soient aliphatiques, cycliques, ou aromatiques, comportant un groupe isocyanate ou plus. On préfère toutefois les diisocyanates et les triisocyanates. Parmi ceux-ci sont particulièrement préférés ceux de nature aliphatique.

Par isocyanates aliphatiques, on entend tous les composés dont les liaisons ouvertes (celles liant les atomes de carbone à une fonction isocyanate ou dérivée, notamment carbamate, biuret ou allophanate) sont portées par un carbone de configuration sp³, y compris les isocyanates arylaliphatiques ou acycliques et/ou pouvant comporter un ou plusieurs hétérocycles. Ils comprennent de préférence moins de 30 atomes de carbone.

On peut citer en particulier les isocyanates comprenant un enchaînement (poly)méthylène comportant de 1 à 30, avantageusement de 2 à 12, de préférence de 4 à 8 motifs -CH₂-.

Il s'agit notamment des groupements tétraméthylène, hexaméthylène ou octaméthylène.

On peut également citer les isocyanates comportant un groupement consistant en un homologue ramifié de ceux-ci, notamment le groupement 2-méthyl pentylène.

On peut également citer les isocyanates comportant un groupement cycloalkyle ou arylène.

Sont notamment préférés les isocyanates monomères suivants :
- 1,6-hexaméthylène diisocyanate,
- 1,12-dodécane diisocyanate,
- cyclobutane 1,3-diisocyanate,
- cyclohexane 1,3 et/ou 1,4-diisocyanate,
- 1-isocyanato 3,3,5-triméthyl-5-diisocyanato-méthyl cyclohexane (isophorone diisocyanate), IPDI),
- 1,3-bisisocyanatométhyl cyclohexane,
- le norbornane diisocyanate (NBDI).

La durée de chauffage est avantageusement d'au plus 5 heures, et d'au moins 5 minutes, de préférence d'au moins 30 minutes.

La réaction peut être effectuée en l'absence ou en présence d'un solvant. On préfère généralement la mettre en oeuvre en l'absence de solvant.

Après élimination des monomères par distillation, on obtient du dimère sensiblement pur, notamment exempt de composés à motif isocyanurate.

Le procédé de l'invention peut être optimisé en chauffant le mélange réactionnel selon un gradient de température décroissant, afin de déplacer l'équilibre dimère/monomère(s) dans le sens de la formation du dimère.

On peut également, conformément au procédé de l'invention, préparer des isocyanates dimères de manière continue, en soutirant les monomères de départ n'ayant pas réagi et en les recyclant vers l'étape de dimérisation. On obtient ainsi des produits dimères purs, non colorés, sans additif ou catalyseur qui peuvent ensuite être :
- ajoutés à une composition d'isocyanates polyfonctionnels pure (c'est-à-dire ne contenant pas de monomères de départ), ou à une composition pour peinture ou revêtement, notamment de type polyuréthanne, contenant au moins un diisocyanate ou un polyisocyanate et un composé comprenant une fonction réactive avec la ou les fonctions isocyanates de l'isocyanate, notamment un alcool ou un polyol, une amine primaire, secondaire, voire tertiaire ,
- ajoutés à une composition d'isocyanates polyfonctionnels brute obtenue par polycondensation de monomères de départ et contenant des monomères n'ayant pas réagi pour former un mélange sur lequel est ensuite réalisée une réaction de polycondensation, polymérisation, oligomérisation, carbamatation, allophanatation, ou réticulation avec un composé comportant une fonction réactive avec la fonction isocyanate pour obtenir une composition contenant de l'isocyanate dimère et des composés de fonctionnalité supérieure à 2, de nature différente de la composition de départ, suivie d'une étape d'élimination des monomères.

Dans tous les cas de figure, le(s) monomère(s) entrant dans la structure du(des) dimère(s) peuvent être identiques ou différents du(des) monomère(s) utilisé(s) pour préparer la composition d'isocyanates polyfonctionnels.

Les dimères selon l'invention peuvent être obtenus à partir d'un seul monomère ou mélange de monomères différents. On peut également préparer le dimère à partir d'un ou plusieurs monomères pour obtenir un dimère qui sera un homodimère (dimère symétrique) dans le cas où il est obtenu à partir d'isocyanates monomères identiques ou un hétérodimère (dimère mixte) dans le cas contraire, et mélanger le dimère ainsi obtenu avec un ou plusieurs autres homodimères ou hétérodimères différents.

Le procédé selon l'invention est particulièrement avantageux dans la mesure où il ne nécessite pas le recours à un catalyseur de dimérisation du type mentionné précédemment, notamment du type phosphine ou dialkylaminopyridine qui sont des composés généralement toxiques ou nocifs pour l'homme et présentent pour les phosphines en particulier, des risques d'inflammabilité.

Le procédé de l'invention permet en outre d'enchaîner plusieurs réactions tout en conduisant de manière économique à des compositions d'isocyanates polyfonctionnels de structures diverses et présentant une viscosité substantiellement plus basse en comparaison des mêmes compositions ne comportant pas d'isocyanate(s) dimère(s).

Grâce aux travaux des inventeurs, il a en outre pu être constaté que la réaction de dimérisation pouvait être favorisée lorsqu'on ajoute au milieu réactionnel un composé polyhydroxylé de formule générale I :

R[-C-(CH₂OH)₃]ₙ (I)

dans laquelle:
R est un groupe hydrocarboné mono ou n- valent ayant de 1 à 30, avantageusement de 1 à 18 atomes de carbone, de préférence de 1 à 6, plus préférentiellement de 1 à 4 atomes de carbone et des atomes d'hydrogène dont la chaîne hydrocarbonée peut être interrompue par un ou plusieurs atomes de chalcogène, avantageusement léger (O,S), et peut porter 1 à 3 groupes OH, R étant avantageusement un groupe choisi parmi un groupe alkyle en C₁-C₄ pouvant être interrompu par un atome d'oxygène ou de soufre et/ou éventuellement substitué par 1 à 3 groupes OH, ou un reste issu de réactions de silylation du pentaérythritol,
R étant de préférence un groupe alkyle en C₁-C₄, éventuellement substitué par un groupe OH, ou un groupe éthyle ou hydroxyméthyle,
n est un nombre entier allant de 1 à 3,
et/ou des produits issus du composé de formule générale I par réaction avec un composé portant une fonction isocyanate de préférence aliphatique.

Les produits issus du composé de formule générale I définis ci-dessus peuvent en particulier répondre aux formules II et/ou III suivantes: 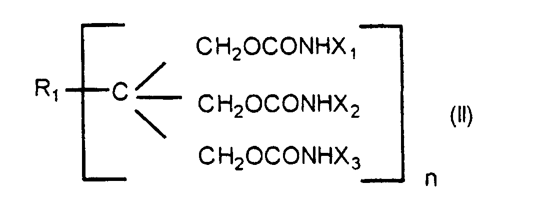 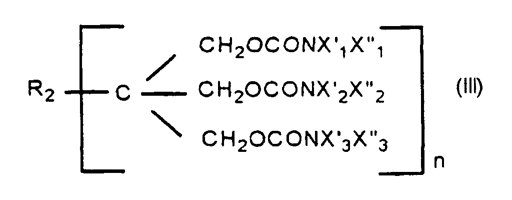 dans lesquels un ou plusieurs de X₁, X₂ et X₃ représente des groupes R'-(N=C=O)ₚ dans lesquels R' identiques ou différents sont des groupes aliphatiques p valents, c'est-à-dire dont les liaisons ouvertes (celles liant les atomes de carbone à une fonction isocyanate ou dérivée, notamment carbamate, biuret ou allophanate) sont portées par un carbone de configuration sp³, y compris des groupes arylaliphatiques ou acycliques et/ou pouvant comporter des hétérocycles et/ou en particulier lorsque p = 0, des groupes carbamate, biuret et/ou isocyanurate, R' comportant de préférence de 3 à 30 atomes de carbone, et p est un nombre entier, variant suivant le degré de polymérisation du mélange réactionnel, en général compris entre 0 et 5, avantageusement égal à 1 ou 2, de préférence égal à 1, auquel cas R' est un groupe divalent tel que défini ci-dessus, les autres représentant, le cas échéant, un groupe de formule 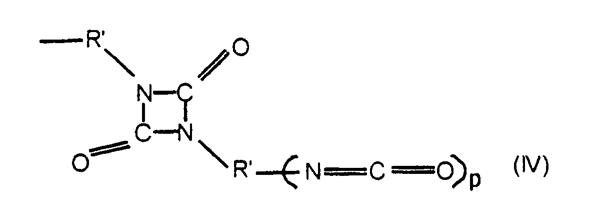 R' et p étant tels que définis ci-dessus,
R₁ étant R, avec les groupes OH substitués le cas échéant par un groupe CONX₁H, X₁ étant tel que défini ci-dessus.
n est un nombre entier allant de 1 à 3; et
- l'un au moins de NX'₁X"₁, NX'₂X"₂ et NX'₃X"₃ représente le groupe 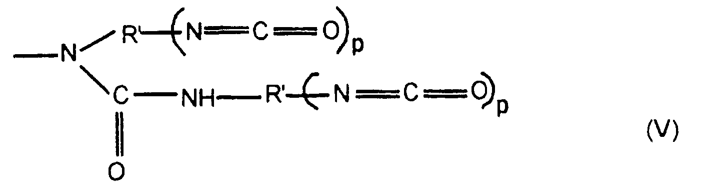
R' étant tel que défini précédemment, les autres représentant un groupe NX₁H ou NX₁-silyle avec X₁ tel que défini précédemment, le groupe silyle provenant le cas échéant de la destruction du catalyseur de type silazane notamment tel que défini dans EP 89297 et
R₂ étant R, avec les groupes OH substitués le cas échéant par un groupe CONX₁H ou 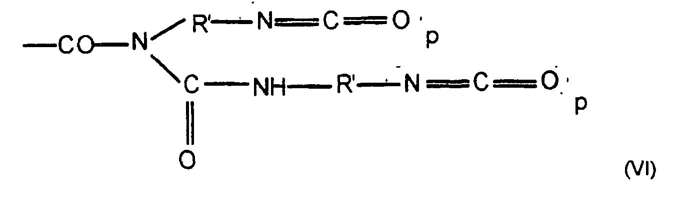 R' étant tel que défini ci-dessus, et
n est un nombre entier allant de 1 à 3.

La nature de R' est indifférente, celui-ci n'intervenant pas dans la réaction de polymérisation. De manière générale R' est le groupe hydrocarboné d'un isocyanate tel que défini ci-dessus pour les isocyanates monomères de départ. Pour des raisons pratiques, on préfère toutefois des groupes R' ayant de 1 à 30 atomes de carbone.

De préférence, R' est un groupe tel que défini ci-dessus divalent avec p égal à 1.

On peut citer notamment les groupes divalents hexaméthylène, tétraméthylène, norbornylène, bis-cyclohexylèneméthane, et le radical divalent dérivé de l'IPDI.

Lorsqu'il est ajouté au milieu réactionnel, le composé de formule générale I permet la préparation, avec une sélectivité élevée, d'isocyanates dimères à motif uretidine dione à partir d'isocyanates monomères, notamment de diisocyanates, le taux de conversion des fonctions isocyanates étant avantageusement d'au moins 5 %, de préférence au moins 10 %.

Les composés de formule générale I, II et/ou III peuvent être également utilisés comme prépolymères.

En outre les composés de formule générale I, II et/ou III, avantageusement II ou III, de préférence III, ont une fonction de stabilisation des isocyanates dimères.

Les composés de formule générale II et III peuvent être et sont en général obtenus par réaction du composé de formule générale I avec un isocyanate de formule générale VII :

R'-(N=C=O)ₚ₊₁ (VII)

dans laquelle R' et p sont tels que définis ci-dessus

Notamment le groupe R' est le groupe hydrocarboné dérivé d'un isocyanate, notamment un di- et/ou triisocyanate, de préférence aliphatique tel que défini précédemment.

En effet, les inventeurs auteurs de la présente invention ont constaté que lorsqu'un composé de formule générale I telle que définie ci-dessus était mis à réagir avec un isocyanate, il se formait en règle générale une certaine proportion de composés de formule générale II et/ou III telle que définies ci-dessus, lesquels favorisent à leur tour la réaction de dimérisation des diisocyanates de départ.

Les composés de formule générale I et/ou II, et/ou III sont utilisés en quantité efficace à activité stabilisatrice et de préférence avec un rapport fonctions isocyanates/fonctions hydroxy supérieur à 4, de préférence supérieur à 20.

Avantageusement, on utilise comme composé polyhydroxylé de formule générale I le pentaérythritol ou le triméthylolpropane, et comme composé de formule générale II et/ou III les carbamates et/ou allophanates correspondants obtenus par réaction du pentaérythritol ou du triméthylolpropane avec un isocyanate, notamment un diisocyanate, avantageusement l'HDI.

On connaissait de US 5 115 071 l'utilisation de composés polyhydroxylés, notamment du triméthylolpropane pour la préparation de prépolymères par polycondensation avec des diisocyanates aliphatiques à une température comprise entre 0 et 120°C. Cependant, ce document ne fait pas mention de la production de dimères. En outre, il indique tout particulièrement que l'homme de l'art prendra les précautions nécessaires pour que les produits obtenus soient exempts de produits parasites tels que allophanates, oligomères et autres produits.

Au contraire, les inventeurs auteurs de la présente invention ont trouvé que, dans les conditions d'utilisation d'un composé polyhydroxylé de formule générale I tel que défini précédemment, selon la présente invention, pour la production de dimères formés par condensation de deux isocyanates de départ, il se formait une certaine quantité de composés allophanates.

Le pentaérythritol est particulièrement préféré, parce que, surtout lorsqu'il est sous forme allophanate, il permet d'obtenir des fonctionnalités élevées (qui peuvent atteindre 8 et plus) avec une viscosité réduite.

Quand on l'utilise dans ce but, il est souhaitable que sa concentration dans le mélange réactionnel soit d'au moins 10 %, avantageusement d'au moins 20 % et d'au plus 90 %, avantageusement 80 % en masse par rapport à la masse du mélange réactionnel.

Pour certaines applications, notamment lorsque la diminution de viscosité doit être importante, on préfère toutefois éviter l'utilisation d'un composé de formule générale I à III tel que défini ci-dessous.

Lorsque l'on met en oeuvre un composé polyhydroxylé de formule générale I ainsi que des carbamates de formule générale II et des allophanates de formule générale III de l'invention, il est avantageux d'opérer à une température supérieure à 110° C et de préférence supérieure à 130°C, et de préférence d'au plus 180° C, et une durée de réaction comprise entre 1 heure et 1 journée, la température de réaction étant choisie avantageusement de façon à être supérieure à la température de dissolution, le cas échéant, du polyol de formule générale I ou le cas échéant des composés de formule générale Il et III, la température de dissolution étant la température à laquelle est dissous au moins 1 g/l de réactif par composition isocyanate.

Les composés de formule générale I, II ou III peuvent être ajoutés tels quels dans le milieu réactionnel comprenant les isocyanates monomères, semblables ou différents, de préférence en l'absence de solvants, ou être fixés (y compris par adsorption) à un support, notamment une résine.

Dans le cas où on ajoute un composé de formule I, les composés de formule générale II et/ou III peuvent se former spontanément au bout d'un temps de réaction suffisant.

Il est également possible d'ajouter au milieu réactionnel un composé de formule générale II et/ou un composé de formule générale III.

Un autre objet de l'invention est constitué par des procédés de préparation de compositions d'isocyanates polyfonctionnels mettant en oeuvre dans une de leurs étapes le procédé de préparation de dimères isocyanates selon l'invention.

Ainsi, dans une première variante, l'invention a pour objet un procédé de préparation d'une composition d'isocyanates polyfonctionnels de faible viscosité, comportant au moins un isocyanate trimère à motif isocyanurate et/ou biuret et au moins un isocyanate dimère à motif uretidine-dione à partir d'isocyanates monomères de départ, et éventuellement d'autres monomères comprenant les étapes suivantes :
i) on chauffe le milieu réactionnel de départ en l'absence de catalyseur de dimérisation à une température d'au moins 50°C, avantageusement d'au moins 80°C, de préférence d'au moins 120°C, et d'au plus 200°C, avantageusement d'au plus 170°C, pendant une durée inférieure à 24 heures, avantageusement inférieure à 5 heures ;
ii) on fait réagir le mélange réactionnel de l'étape i) contenant des monomères n'ayant pas réagi avec un catalyseur de (cyclo)trimérisation ou (cyclo) condensation, dans les conditions de (cyclo)trimérisation ou (cyclo) condensation ;
iii) on élimine du mélange réactionnel de l'étape ii) les monomères de départ n'ayant pas réagi ;
iv) on isole la composition d'isocyanates polyfonctionnels de faible viscosité comprenant au moins un isocyanate trimère et au moins un isocyanate dimère.

Avantageusement, on ajoute un composé de formule générale I à l'étape i).

Selon une seconde variante, l'invention a également pour objet un procédé de préparation d'une composition d'isocyanates polyfonctionnels comportant au moins un isocyanate trimère à motif isocyanurate et/ou biuret et au moins un isocyanate dimère, à motif urétidine dione, à partir d'isocyanates monomères de départ, et éventuellement d'autres monomères, comprenant les étapes suivantes:
i) on fait réagir les monomères de départ, avec un catalyseur de (cyclo)trimérisation ou (cyclo) condensation dans les conditions de (cyclo)trimérisation ou (cyclo) condensation;
ii) on chauffe le mélange réactionnel de l'étape i) contenant des monomères isocyanates n'ayant pas réagi en l'absence de catalyseur de dimérisation à une température d'au moins 80°C, avantageusement d'au moins 120°C, de préférence d'au moins 130°C, et d'au plus 200°C, avantageusement d'au plus 170°C, pendant une durée inférieure à 24 heures, avantageusement inférieure à 5 heures ;
iii) on élimine du mélange réactionnel de l'étape ii) les monomères de départ n'ayant pas réagi ;
iv) on isole la composition polyisocyanate de faible viscosité comprenant au moins un isocyanate trimère et au moins un isocyanate dimère.

Si on souhaite ajouter un composé de formule générale I telle que définie précédemment, il est préférable de l'ajouter à l'étape ii) ou i).

Lorsque les monomères de départ sont des isocyanates de formule générale VII telle que définie précédemment, on obtient notamment :
- par cyclotrimérisation, des trimères à cycle isocyanurate de formule générale VIII : 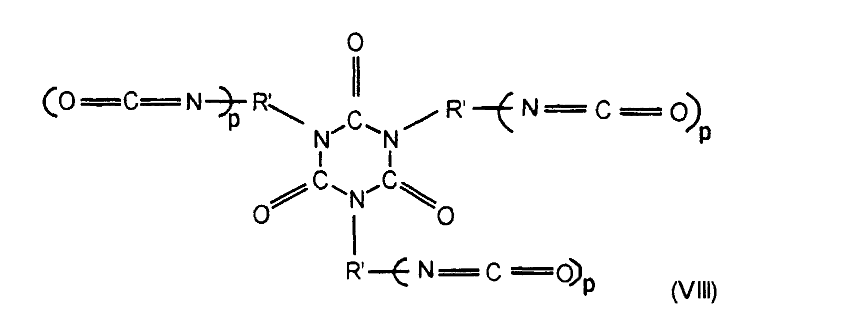
dans laquelle les R' et p semblables ou différents sont tels que définis précédemment, p étant de préférence égal à 1,
- par biurétisation des composés à motif biuret, le motif biuret étant représenté par la formule générale IX suivante : 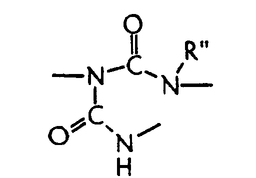 avec R" représentant H ou un reste hydrocarboné
- et des dimères à cycle uretidine dione de formule générale X : 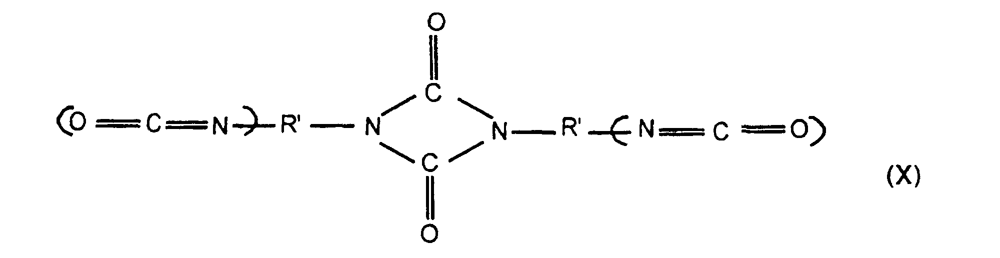
dans laquelle R' et p semblables ou différents sont tels que définis précédemment.

La synthèse du trimère à motif isocyanurate peut être faite de toute manière connue par l'homme de métier, mais une mention particulière doit être faite des procédés qui utilisent les alcools, notamment comme co-catalyseurs (voir en particulier les techniques visées par la demande FR 2 613 363 et dans les documents qui y sont cités, notamment le brevet US 4 324 879). Dans ce cas, on peut certes utiliser les composés de formule générale I, II et/ou III simultanément avec le catalyseur de trimérisation. Cette manière n'est toutefois pas très heureuse dans la mesure où il y a un risque que le dimère formé soit transformé par ledit catalyseur en trimère. Aussi est-il préféré de n'ajouter le composé de formule générale I, II et/ou III selon l'invention qu'après destruction dudit catalyseur de trimérisation. Dans le cas du procédé décrit notamment dans la demande de brevet EP 89 297, on utilise toutefois avantageusement les composés de formule I, II, voire III pour détruire le catalyseur de trimérisation. On peut alors utiliser les alcools et/ou les carbamates qui en sont issus comme agent de destruction du composé du catalyseur qui alors silyle une partie des fonctions alcools du composé de formule générale I, II, voire III selon l'invention et/ou des carbamates qui en sont issus.

Si l'on souhaite préparer des trimères à fonction isocyanurate, à partir notamment de diisocyanates monomères, on stoppe la réaction de trimérisation lorsque le taux souhaité de conversion des diisocyanates monomères, essentiellement en trimères, est obtenu et on ajoute au milieu réactionnel tel que défini précédemment le(s) composé(s) de formule générale I et/ou II et/ou III de l'invention.

Les inventeurs ont en outre déterminé que lorsque le catalyseur de trimérisation mis en oeuvre était un disilazane ou un dérivé aminosilylé, par exemple de l'hexaméthyldisilazane, celui-ci était détruit par simple addition d'un composé polyhydroxylé de formule générale I de l'invention, en particulier lorsque celui-ci est du pentaérythritol.

Ainsi, après addition des composés de formule I et /ou II et/ou III de l'invention, la réaction est conduite jusqu'à obtention de la viscosité souhaitée correspondant à un taux de dimères déterminé, ou plus généralement jusqu'à obtention du taux de dimères souhaité.

La réaction selon la présente invention présente une caractéristique unique par rapport aux autres réactions de dimérisation, qui est de présenter une très faible production de trimères.

Ainsi, pour la préparation de mélanges de dimères et trimères de l'HDI selon les deux variantes exposées ci-dessus, la réaction est avantageusement effectuée pendant une durée d'environ 1 h 30 à une température d'environ 150°C, de sorte que le rapport dimères/trimères est d'environ 1/6 à 1/3.

En fin de réaction, on retrouve dans le milieu réactionnel, des polyisocyanates dimères de formule générale X, éventuellement des trimères de formule générale VIII et/ou des biurets, en particulier lorsque la dimérisation est conduite à partir d'un milieu réactionnel comprenant des polyisocyanates trimères de formule générale VIII et/ou des biurets, des carbamates, notamment des carbamates de formule générale II formés entre les composés hydroxylés de formule générale I de l'invention et les diisocyanates monomères de formule générale II et/ou des allophanates de formule générale III, notamment des allophanates formés entre ledit composé polyhydroxylé de formule générale I et les diisocyanates monomères de formule générale II.

La composition ainsi formée étant en outre caractérisée en ce qu'elle est exempte de catalyseur de dimérisation, notamment de type phosphine, aminopyridine, phosphoramide, (notamment hexaméthyl phosphoramide), organométallique et amine tertiaire.

La composition selon l'invention comprend de préférence des composés de formule II dans laquelle tous les groupes X₁, X₂ et X₃ représentent R'-N=C=O avec R' identiques ou différents, et/ou des composés dans lesquels un seul ou deux de X₁, X₂ et X₃ représente le groupe de formule générale IV, les autres étant -R'-N=C=O, avec R' identique ou différent.

De préférence, dans les composés de formule III, un seul des groupes NX'₁X"₁, NX'₂X"₂ et NX'₃X"₃ représente le groupe de formule V, les autres représentant le groupe NX₁ H, X₁ étant tel que défini ci-dessus.

Les produits obtenus après élimination des monomères de départ sont de viscosité réduite.

Par "viscosité réduite" au sens de la présente invention, on entend des compositions (poly)isocyanates comprenant un dimère à cycle urétidine-dione présentant une viscosité à 25°C abaissée d'au moins 20 %, avantageusement d'au moins 30 %, de préférence d'au moins 50 % par rapport à la même composition polyisocyanate ne comprenant pas d'isocyanate dimère comme mentionné ci-dessus.

Les compositions isocyanates polyfonctionnelles de l'invention se caractérisent ainsi par le fait qu'elles contiennent au moins un polyisocyanate de fonctionnalité supérieure à deux et un dimère isocyanate à cycle uretidine dione, possédant au moins deux fonctions isocyanates, ce dernier étant obtenu par une réaction thermique en l'absence de catalyseur spécifique de dimérisation, éventuellement en présence d'un composé de formule générale I, II et/ou III.

Dans les compositions de l'invention, on constate par ailleurs que la quantité de dimère formé est en équilibre avec les autres molécules polyisocyanates de la composition. La composition isocyanate est donc stable au cours du temps et ne nécessite pas de rectification régulière pour éliminer les monomères qui seraient formés par dissociation du dimère.

En particulier, la stabilité est d'autant meilleure que les conditions suivantes sont respectées pour la composition :
- motifs dimères vrais total des fonctions isocyanates ≤ 30 %

Avantageusement ce rapport est inférieur à 15 %, de préférence inférieur à 12 % (masse/masse).

Il est de préférence supérieur à 3,5 %, avantageusement 5 % dans le cas des isocyanurates.

Les dimères vrais sont les composés de formule générale X ci-dessus.

L'intérêt des procédés de préparation de compositions d'isocyanates polyfonctionnels de l'invention réside également en ce qu'ils ne nécessitent qu'une seule opération d'élimination des monomères de départ, pour obtenir une composition d'isocyanates polyfonctionnels de basse viscosité.

Un autre avantage du procédé de l'invention est qu'il permet d'augmenter le taux de transformation des monomères pour des viscosités relativement faibles.

De manière typique, pour un taux de transformation de 53%, la viscosité d'une composition comprenant 37 % de trimères vrais d'HDI (à un seul cycle isocyanurate) et 6,6% de dimères vrais (à un seul cycle urétidinedione) d'HDI est de 4694 mPa.s à 25°C, avec une fonctionnalité moyenne de 3,7.

Le procédé selon l'invention permet d'obtenir des produits de plus haute fonctionnalité avec des taux de transformation des monomères élevés tout en gardant des viscosités réduites.

Le taux de transformation (après trimérisation et dimérisation) peut notamment être compris après distillation entre 35 et 55 de préférence 40 et 50%.

Grâce à l'invention, on peut ajouter au mélange réactionnel issu du procédé de dimérisation selon l'invention un alcool, notamment un polyol, de préférence de formule générale I, ou autre composé possédant au moins une fonction autre qu'isocyanate réactive avec la fonction isocyanate et enchaîner une réaction de condensation avec ce composé, notamment une réaction de carbamatation et/ou d'allophanatation sans détruire le dimère.

Or comme évoqué précédemment, l'homme du métier se serait attendu à ce que se produise une scission du cycle urétidine-dione en deux molécules isocyanates capables de réagir avec des réactifs divers ; le fait que le dimère reste stable dans ces conditions est tout à fait surprenant, notamment après réaction avec un alcool et distillation sous vide.

L'invention a donc également pour objet un procédé de préparation d'une composition d'isocyanates polyfonctionnels comprenant au moins un isocyanate dimère à motif uretidine-dione et au moins un autre composé possédant une fonction dérivée de la fonction isocyanate à partir d'isocyanates monomères et d'un autre composé monomère comprenant au moins une fonction autre qu'isocyanate, réactive avec la fonction isocyanate, comprenant les étapes suivantes :
i) on chauffe le milieu réactionnel de départ en l'absence de catalyseur de dimérisation, éventuellement en présence d'un composé de formule générale I, II et/ou III à une température supérieure à au moins 50°C, avantageusement à au moins 80°C, de préférence à au moins 120°C et inférieure à au moins 200°C, avantageusement à au moins 170°C, pendant une durée inférieure à 24 heures, avantageusement inférieure à 5 heures ;
ii) on fait réagir le mélange réactionnel de l'étape i) contenant des monomères isocyanates n'ayant pas réagi et un composé comprenant au moins une fonction différente de la fonction isocyanate réactive avec la fonction isocyanate, éventuellement en présence d'un catalyseur ;
iii) on élimine du mélange réactionnel de l'étape ii) les isocyanates monomères et, le cas échéant, le composé comprenant au moins une fonction différente de la fonction isocyanate réactive avec la fonction isocyanate ;
iv) on isole la composition d'isocyanates polyfonctionnels comprenant au moins un isocyanate dimère à motif uretidine dione et au moins une autre fonction dérivée de la fonction isocyanate.

Par "fonction isocyanate dérivée", on entend notamment les fonctions suivantes: carbamate, urée, biuret, uréthanne, urétine dione, isocyanate masquée et allophanate.

Le composé possédant une fonction dérivée de la fonction isocyanate peut être notamment un composé de formule générale II ou III, telle que définie précédemment, auquel cas le composé ajouté à l'étape i) est un composé de formule générale I telle que définie ci-dessus.

Lorsque l'on souhaite une composition finale de prépolymères, préférentiellement de type polyuréthanne, il est particulièrement avantageux, pour abaisser la viscosité du mélange, d'ajouter, au stade de la dimérisation, au milieu réactionnel contenant les monomères de départ, outre éventuellement le composé de formule générale I et/ou les composés qui en dérivent, un composé allongeur de chaîne portant au moins deux fonctionnalités, notamment un composé de nature monomérique, oligomérique et/ou polymérique de type diol, diamine ou dicarboxylique.

L'invention a également pour objet un procédé de préparation d'une composition d'isocyanates comprenant au moins un isocyanate dimère à motif uretidine-dione et au moins un composé possédant une fonction dérivée de la fonction isocyanate à partir d'isocyanates monomères et d'un autre composé comprenant au moins une fonction autre qu'isocyanate réactive avec la fonction isocyanate, comprenant les étapes suivantes :
i) on fait réagir les monomères isocyanates avec un composé comprenant au moins une fonction différente d'une fonction isocyanate réactive avec la fonction isocyanate éventuellement en présence d'un catalyseur ;
ii) on chauffe le mélange réactionnel de l'étape i) contenant des monomères isocyanates n'ayant pas réagi en l'absence de catalyseur de dimérisation à une température supérieure à au moins 50°C, avantageusement au moins 80°C, de préférence au moins 120°C et inférieure à au moins 200°C, avantageusement au moins 170°C, pendant une durée inférieure à 24 heures, avantageusement inférieure à 5 heures;
iii) on élimine du mélange réactionnel de l'étape ii) les monomères et, le cas échéant, le composé comprenant au moins une fonction différente de la fonction isocyanate réactive avec la fonction isocyanate ;
iv) on isole la composition d'isocyanate comprenant au moins un polyisocyanate dimère et au moins un composé possédant une fonction dérivée de la fonction isocyanate.

Les réactions des étapes respectivement ii) et i) qui viennent d'être décrites ci-dessus pour les deux variantes du procédé selon l'invention consistent avantageusement en réactions de carbamatation, allophanatation, création d'une fonction urée, biuret, uréthanne, isocyanate masquée et toute autre fonction dérivée de la fonction isocyanate obtenue par réaction de la fonction isocyanate avec une fonction réactive, avantageusement de nature nucléophile.

Les composés possédant une fonction dérivée de la fonction isocyanate sont notamment de formules générales II et III décrites ci-dessus.

Les réactions mentionnées ci-dessus peuvent également avoir lieu simultanément suivant le ou les composés réactifs nucléophiles et les conditions réactionnelles mises en oeuvre.

Parmi les procédés préférés de préparation d'une composition d'isocyanates comprenant outre un isocyanate dimère à motif urétidine-dione, un composé isocyanate dérivé, on peut citer en particulier les procédés de préparation de biurets par réaction dans l'étape ii), le cas échéant i) des monomères isocyanates avec eux-mêmes en présence d'eau.

Des compositions obtenues par un tel procédé contenant au moins un composé biuret et au moins un composé urétidine-dione sont nouvelles et constituent un autre objet de l'invention.

Ces compositions contiennent avantageusement 3 %, de préférence au moins 10 %, de manière encore plus préférée au moins 20 %, en poids de biuret.

Les compositions selon l'invention ne contiennent que peu ou pas de solvant, au plus 40 % en masse par rapport à la masse totale de la composition, avantageusement au plus 25 %, de préférence moins de 10 %, de manière encore plus préférée moins de 5%, voir moins de 1 % en masse. On préfère en tout état de cause les compositions exemptes de solvant.

En outre, parallèlement aux réactions aboutissant à un composé comportant au moins une fonction isocyanate dérivée, on peut également avoir une réaction de (cyclo)trimérisation ou (cyclo)condensation des monomères présents dans le mélange réactionnel. La réaction est alors effectuée dans des conditions appropriées en présence d'un catalyseur de (cyclo)trimérisation ou (cyclo)condensation.

Les compositions ainsi obtenues après élimination des monomères isocyanates et autre(s) composé(s) volatil(s) comprenant une fonction réactive avec la fonction isocyanate présentent également une viscosité abaissée du fait de la présence de l'isocyanate dimère qui joue le rôle de diluant réactif.

Le procédé de l'invention peut être adapté aux divers pofyisocyanates aliphatiques, cycloaliphatiques, araliphatiques ou aromatiques ou au mélange de ces divers isocyanates de départ qui peuvent être mono- à polyfonctionnels, mais de préférence difonctionnels (à savoir comportant deux fonctions isocyanates).

Si l'on recherche des compositions de très basse viscosité, on préférera les diisocyanates à chaîne aliphatique présentant des séquences polyméthylène faiblement ramifiées, de préférence non cycliques. Ces monomères représentent au moins la moitié, avantageusement les 2/3, de préférence la totalité en masse des monomères utilisés.

Les isocyanates de départ peuvent comporter d'autres fonctions de préférence ne présentant pas d'hydrogène réactif, notamment des fonctions carbamate, allophanate, urée, biuret, ester, amide, alkoxysilane, isocyanate masquée.

En général, si les monomères de départ n'ont pas été totalement transformés en dimère et, le cas échéant, en un autre polyisocyanate, l'excès de monomères est éliminé par un processus connu de l'homme de l'art tel que, dévolatilisation, distillation sous vide ou selon un processus d'extraction par un gaz à l'état critique ou supercritique tel que décrit dans FR 2 604 433. La température d'élimination du monomère est dépendante du processus mis en jeu et de la température de tension de vapeur de l'isocyanate de départ.

La composition finale comprendra généralement moins de 1 %, avantageusement moins de 0,5 % en masse de monomères par rapport à la masse totale de la composition.

De plus, lorsque le dimère obtenu selon l'invention est porteur de fonctions isocyanates libres, il peut alors subir les mêmes transformations que l'isocyanate monomère parent ou que les autres polyisocyanates porteurs de fonctions isocyanates. Ainsi, les fonctions isocyanates du dimère obtenu sans catalyseur peuvent être transformées comme les autres fonctions isocyanates en fonctions carbamates, allophanates, urées, biurets, etc, en fonction des réactions mises en oeuvre sur le mélange d'isocyanates. L'excès d'isocyanate monomère parent est ensuite éliminé selon un processus précédemment cité.

L'invention a également pour objet l'utilisation d'un composé de formule générale I et/ou des produits issus de ce dérivé par réaction avec un composé portant une fonction isocyanate notamment aliphatique, pour la préparation d'isocyanates dimères à partir d'isocyanates monomères notamment aliphatiques, avec un taux de conversion d'au moins 2 %, avantageusement au moins 3%, de préférence au moins 4 % des fonctions isocyanates de départ en fonctions urétidine dione.

Les produits en question issus du composé de formule générale I sont notamment les composés de formule générale II et/ou III tels que définis précédemment.

Certains composés obtenus dans la mise en oeuvre du procédé de l'invention sont nouveaux et constituent également un objet de celle-ci.

Ils peuvent être obtenus de manière intermédiaire ou être retrouvés dans le produit réactionnel fini.

Un premier groupe de ces composés est celui de formule générale III telle que définie ci-dessus dans laquelle au moins un des groupes NX'₁X"₁, NX'₂X"₂ et NX'₃X"₃ représente le groupe de formule V telle que définie précédemment, les autres représentant un groupe NX₁H avec X₁, X'₁X"₁, X'₂X"₂, X'₃X"₃ définis tels que précédemment et R¹ tel que défini précédemment à savoir représentant un groupe R avec les groupes OH substitués le cas échéant par un groupe CO-NX₁H ou un groupe de formule V, telle que définie précédemment.

Avantageusement p est égal à 1 et le composé de formule générale III porte un, deux, trois ou quatre groupes allophanates.

Avantageusement R est un groupe (CH₂)ₙ avec n variant de 2 à 8, un groupe norbornyle, cyclohexylméthyle ou 3,3,5-triméthyl cyclohexyl méthyle.

Un second groupe de composés selon l'invention est celui de formule générale III telle que définie précédemment dans laquelle
- les groupes NX'₁X"₁, NX'₂X"₂ et NX'₃X"₃ sont choisis parmi un groupe de formule générale NX₁H, un groupe de formule générale V telle que définie précédemment, un groupe urétidine dione de formule IV, un groupe isocyanurate de formule XI 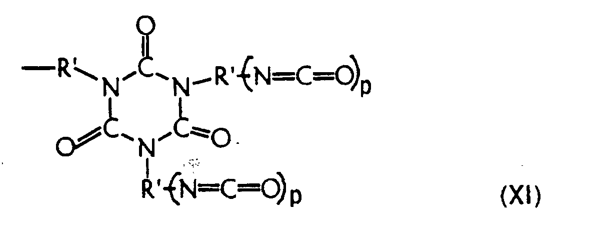 R' et p étant tels que définis précédemment.
- un groupe biuret de formule XII 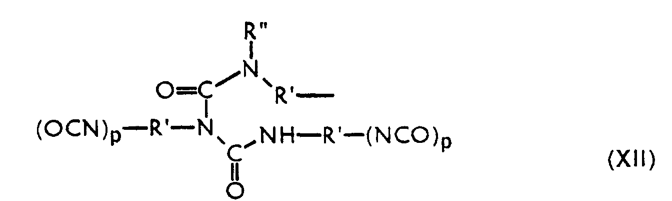 avec R" représentant H ou un reste hydrocarboné
- R' et p étant tels que définis précédemment et R₂ représente le groupe R avec les groupes OH substitués le cas échéant par un groupe choisi parmi CONHX₁H, un groupe de formule VI, un groupe de formule VI, un groupe de formule -CO-NH- (groupe de formule IV), -CO-NH-(groupe de formule XI) et -CO-NH- (groupe de formule XII)
sous réserve que les composés comportent au moins un groupe carbamate de formule NX₁H, respectivement CONHX₁H et/ou allophanate de formule V, respectivement -CO-NH- (groupe de formule V) et au moins un groupe choisi parmi le groupe urétidine dione de formule générale IV, respectivement -CO-NH- (groupe de formule générale IV), un groupe isocyanurate de formule générale XI, respectivement -CO-NH- (groupe de formule générale XI) et un groupe biuret de formule générale XII, respectivement -CO-NH (groupe de formule générale XIII).

Avantageusement, p représente 1 (les monomères de départ sont des diisocyanates).

On préfère également les composés dans lesquels R₁ représente le groupe CH₂OH.

Parmi les composés préférés selon l'invention, on préfère en particulier les dérivés du pentaérythritol comprenant un, deux, trois ou quatre groupes allophanates, et trois, deux, un ou aucun groupe carbamate.

Un autre groupe avantageux est celui constitué par les dérivés du pentaérythritol comportant un groupe urétidine dione, les trois autres groupes OH étant substitués par des groupes carbamate et/ou allophanate (notamment ceux comportant deux groupes carbamate et un groupe allophanate.

On peut citer également les composés correspondant dans lesquels le groupement urétidine dione est remplacé par un groupement isocyanurate et/ou biuret.

Les homologues correspondants du triméthylolpropane constituent également un groupe de composés avantageux au sens de la présente invention.

L'invention n'est pas limitée aux composés de basse viscosité liquides, mais peut conduire à des compositions en poudre si les isocyanates monomères de départ sont choisis judicieusement. Ainsi, si on prend des diisocyanates cycloaliphatiques, on peut obtenir des mélanges comportant au moins un composé à fonction dimère et un composé issu de la transformation de l'isocyanate parent monomère en excès qui, après élimination des composés monomères en excès selon un processus adéquatement choisi et décrit ci-dessus, permet d'obtenir des compositions en poudre.

Les compositions isocyanates de l'invention se caractérisent par le fait qu'elles contiennent au moins un composé issu de la transformation d'un dimère obtenu selon le procédé de l'invention et d'au moins un composé issu de la transformation d'un isocyanate ne possédant pas de fonctions dimère, ces composés pouvant éventuellement être des polyisocyanates dont les fonctions sont bloquées par des groupes protecteurs de nature différente ou identique, pouvant subir ensuite une réaction de transformation selon un processus physique (effet thermique) ou chimique ou actinique ("UV curing", "electron beam curing", infra-rouge).

L'invention a notamment pour objet une composition comprenant au moins un composé de formule générale X telle que définie ci-dessus et au moins un composé de formule générale II telle que définie ci-dessus et/ou au moins un composé de formule générale III telle que définie ci-dessus.

La composition selon l'invention comprend également de manière avantageuse un composé de formule VIII telle que définie ci-dessus.

Ces produits peuvent servir à la préparation de peintures en poudre ou de compositions de revêtements en poudre ou toute autre application mettant en jeu lesdites compositions de l'invention issues du procédé décrit.

Les compositions obtenues selon le procédé et issues de mélanges d'isocyanates aliphatiques et d'isocyanates cycloaliphatiques pouvant conduire à des poudres sont également un objet de l'invention.

De même, les mélanges polyuréthannes contenant au moins un composé porteur d'une fonction dimère obtenu selon le procédé décrit, éventuellement en poudre, font partie de l'invention.

Les polyisocyanates obtenus par le procédé de l'invention sont avantageusement utilisés comme durcisseurs pour la préparation de revêtements, en particulier de peintures et vernis polyuréthannes par réaction des polyisocyanates avec un polyol.

A cet effet tous types de polyols conviennent.

De manière surprenante on a toutefois constaté que certains polyols apportaient des avantages appréciables lorsqu'ils étaient mis à réagir avec des polyisocyanates obtenus conformément à la présente invention.

Ces polyols peuvent être de nature acrylique ou polyester.

Lorsqu'on utilise un polyol de nature acrylique, on préfère que celui-ci réponde aux conditions suivantes pour un extrait sec (ES) compris entre 75-80%, en poids.
- Mw (poids moléculaire moyen en poids) non supérieur à 10000, avantageusement non supérieur à 5000, de préférence non supérieur à 2000.
   On préfère Mw inférieur à 10000 avantageusement inférieur à 5000, de préférence inférieur à 2000.
- Mn (poids moléculaire moyen en nombre) non supérieur à 5000, avantageusement non supérieur à 3000, de préférence non supérieur à 800.
   On préfère Mn inférieur à 5000, avantageusement inférieur à 3000, de préférence inférieur à 800.
- Mw/Mn (rapport de dispersité) non supérieur à 5, avantageusement non supérieur à 3, de préférence non supérieur à 2.
   On préfère Mw/Mn inférieur à 5, avantageusement inférieur à 3 de préférence inférieur à 2.
- nombre d'OH/molécule supérieur ou égal à 2, avantageusement supérieur à 2.

Pour plus de détail, on peut se rapporter à la norme ASTM-E222.

Les Mn et Mw sont obtenus avantageusement par chromatographie d'exclusion perméation sur gel en prenant le styrène comme étalon.

On préfère des polyols obtenus par polymérisation d'hydroxy-alkyl(meth)acrylates, notamment hydroxyéthyl(meth)acrylate et hydroxypropyl (meth)acrylates.

Sont tout particulièrement préférées les résines commercialisées sous les dénominations JONCRYL SCX 922 (Johnson Polymers) et SYNOCURE 866 SD (Cray valley).

Lorsque les polyols sont de nature polyester on préfère ceux ayant 100 % d'ES et une viscosité non supérieure à 10000 mPa.s, avantageusement non supérieure à 5000 mPa.s, de préférence non supérieure à 1000 Pa.s, dont le Mw est généralement compris entre 250 et 8000.

Pour obtenir une viscosité satisfaisante, il est également possible d'ajouter au polyol avant ou après mélange avec le polyisocyanate un solvant réactif (autre qu'un dimère vrai).

Avantageusement on utilise une quantité de diluant réactif non supérieure à 30%, avantageusement non supérieure à 20 %, de préférence non supérieure à 10% en masse par rapport à la masse sèche du polyol.

Des avantages considérables en termes de propriétés du revêtement final sont déjà obtenus pour une quantité de solvant réactif inférieur à 10 % en poids. Ces propriétés notamment la vitesse de séchage, la dureté du revêtement et la résistance aux chocs sont encore excellentes lorsque la quantité de solvant réactif est abaissée y compris en l'absence de solvant réactif.

Un autre objet de l'invention est constitué par les compositions pour application simultanée ou successive comprenant :
- un polyisocyanate obtenu par le procédé de l'invention, et
- un polyol tel que défini ci-dessus.

Les compositions obtenues par le procédé de l'invention peuvent être utilisées dans des formulations aqueuses de revêtement, en étant mises en suspension, en émulsion ou en dispersion, ou solubilisées par le greffage d'agents hydrophiles ou par addition de composés tensioactifs.

Les compositions de l'invention peuvent subir une réaction de masquage temporaire partielle ou totale des fonctions isocyanates avec un ou un mélange d'agents de masquage.

Les fonctions isocyanates peuvent ensuite être restaurées par application d'un processus physicochimique tel que l'augmentation de la température ou transformées ou polymérisées par application d'un processus physicochimique tel qu'un rayonnement ultra-violet.

Les compositions selon l'invention peuvent également se présenter sous forme de suspensions.

Elles peuvent comprendre outre les composants décrits ci-dessous:
- éventuellement un ou plusieurs composé(s), minéral(aux) ou organique(s) présentant une fonction de pigmentation, de charge, un agent matant, ou tout autre additif destiné à faciliter l'application du revêtement ou à améliorer les propriétés du revêtement, telle que par exemple un agent d'étalement, un agent "cicatrisant",
- éventuellement, un ou des catalyseurs,
- éventuellement un ou des agents de surface permettant une amélioration de la mise en oeuvre de la formulation tels que, par exemple, un agent doué de propriété tensioactive, un agent anti-mousse, un solvant, une solution aqueuse dont le pH est éventuellement ajusté.

Ces compositions ont des applications dans divers domaines, tels que les revêtements, mousses, enduits, matériaux de construction adhésifs, colles, industrie du vêtement, des cosmétiques, applications médicales ou agrochimiques, formulations de principes dits actifs, etc.

Les exemples ci-après illustrent l'invention.

Sauf indications contraires, les pourcentages sont donnés en poids.

### EXEMPLE 1 :

### Cinétique de formation du dimère de l'hexaméthylène diisocyanate (HDI) par chauffage à 140°C.

Dans un réacteur de 500 ml, muni d'un réfrigérant et chauffé par un bain d'huile, on introduit sous agitation 300 g d'HDI.

On porte le milieu réactionnel à 140°C et on mesure le dimère d'HDI formé après 1, 2, 3, 4, 5 et 6 heures.

Les résultats sont rapportés au tableau ci-dessous :

| Espèce | 1 heure (%) | 2 heures (%) | 3 heures (%) | 4 heures (%) | 5 heures (%) | 6 heures (%) |
|---|---|---|---|---|---|---|
| HDI | 97,8 | 96,7 | 95,6 | 94,7 | 94,1 | 93,4 |
| Dimère | 1,5 | 2,5 | 3,4 | 4.1 | 4,7 | 5,1 |
| Biuret | 0,5 | 0,6 | 0,7 | 0,9 | 0,9 | 1,1 |
| Lourds | 0,2 | 0,2 | 0,3 | 0,3 | 0,3 | 0,4 |

### EXEMPLE 2 :

### Cinétique de formation du dimère de l'hexaméthylène diisocyanate (HDI) par chauffage à 150°C.

Dans un réacteur double enveloppe de 0,5 l chauffé au moyen d'un bain Huber avec une régulation de température au moyen d'une sonde externe, on introduit sous agitation 350 g d'HDI. On chauffe le mélange réactionnel à 150°C et on effectue des prélèvements à 2 heures 30, 5 heures et 7 heures 30.

Le dimère est dosé en IR (infra-rouges). Les résultats sont les suivants :

**Tableau 1 :**

| Temps de réaction | Quantité de dimère HDI (en %) |
|---|---|
| Départ | 0,08 |
| 2 heures 30 | 4,6 |
| 5 heures | 5,8 |
| 7 heures 30 | 6,2 |

### EXEMPLE 3 :

### Cinétique de formation du dimère d'HDI à 160°C.

On procède comme pour l'exemple 1 sauf que l'on ajoute 300 g d'HDI et que le milieu réactionnel est porté à la température de 160°C. On dose l'HDI dimère à 30 minutes, 1 heure, 1 heure 30, deux heures, deux heures 30 et trois heures.

Les résultats sont indiqués dans le tableau ci-après :

**Tableau 2 :**

| Départ | % d'HDI dimère obtenu | HDI résiduel (%) | Biuret (%) | Lourds |
|---|---|---|---|---|
| 30 minutes | 2,4 | 97,3 | 0,3 | - |
| 1 heure | 3,5 | 95,8 | 0,5 | 0,2 |
| 1 heure 30 | 4,2 | 95,0 | 0,6 | 0,2 |
| 2 heures | 4,4 | 94,6 | 0,7 | 0,3 |
| 2 heures 30 | 4,6 | 94,3 | 0,8 | 0,3 |
| 3 heures | 4,8 | 93,9 | 0,9 | 0,4 |

### EXEMPLE 4 :

### Préparation d'une composition d'hexaméthylène diisocyanate trimère (HDT) comprenant de l'HDI dimère

Dans un réacteur de 1 litre muni d'une colonne réfrigérante et chauffé au moyen d'un bain d'huile, on introduit sous agitation 1 000 g d'HDI.

Le milieu réactionnel est chauffé pendant 1 heure 30 à 160°C. On ajoute ensuite 10 g (1 % en poids) d'HMDZ (hexaméthyldisilazane ). Le milieu réactionnel est chauffé pendant 30 minutes à 140°C puis refroidi. Lorsque la température atteint 88°C, 5,5 g de n-butanol sont ajoutés. Après une heure de réaction, le produit est purifié par distillation sous vide. On obtient les résultats suivants :

**Tableau 3 :**

| Espèces | Chauffage 1 H 30 à 160°C | Trimérisation HMDZ, blocage butanol | Distillation (résidus) | Distillation (produit récupéré) |
|---|---|---|---|---|
| HDI | 95,2% | 76,0 % | 94,1 % | 0,5 % |
| Monocarbamate de butyle | - | 0,9 % | 1,1 % | 0,8 % |
| Dimère | 4,3% | 3,7 % | 1,0 % | 14,2 % |
| Trimère | 0,5 % * | 13,2 % | 2,7% | 56,3 % |
| Bis-trimère | | 4,6 % | 0,9 % | 20,6% |
| Lourds | | 1,6 % | 0,2 % | 7,6 % |

| | | | | |
|---|---|---|---|---|
| * Pour l'échantillon de départ, les 0,5 % correspondent à du biuret majoritaire et du bis-dimère. | | | | |

Les lourds sont comptabilisés en tris-trimère. Le massif bis-trimère (composé majoritaire) comprend des tétramères (trimère-dimère) et de l'imino-trimère.

La composition résultante présente une viscosité à 25°C de 509 cps (509 mPa.s).

### EXEMPLE 5 :

### Synthèse d'un polyisocyanate à base trimère isocyanurate de HDI et de dimère de HDI.

Dans un réacteur on charge 1000 g de HDI, on chauffe 3 heures sous agitation à 150°C pour former le dimère sans catalyseur de dimérisation. Le TT (taux de transformation) en HDI mesuré par dosage des fonctions isocyanates est de 5,1 %. La température du milieu réactionnel est diminuée à 130°C et 10 g d'hexaméthyldisilazane sont ajoutés au milieu réactionnel. La température du milieu réactionnel est alors portée à 140°C. La réaction de trimérisation est réalisée pendant 1 h 50. Le taux de transformation global de l'HDI est de 38 % mesuré par la méthode de dosage des fonctions isocyanates. Le catalyseur est détruit par addition du n-butanol (4,6 g) à 80°C. Après 20 minutes, le mélange réactionnel est purifié par distillation sous vide des monomères en excès et donne 320 g d'un mélange de polyisocyanates de viscosité 935 mPa.s à 25°C, de titre NCO (en moles de NCO pour 100 g de composé) de 0,54 et de fonctionnalité 3,3.

La composition est présentée dans le tableau ci-après.

| Espèce | % en poids |
|---|---|
| HDI | 0,24 |
| Monocarbamate de n-butyle et d'HDI | 0,5 |
| Dimère vrai de HDI | 11,3 |
| Trimère vrai de HDI | 51,3 |
| Bis trimère | 25,2 |
| Lourds | 11,46 |

### EXEMPLE 6 :

### Synthèse d'un polyisocyanate à base trimère isocyanurate de HDI et de dimère de HDI.

Dans un réacteur on charge 2017 g de HDI, on chauffe 3 heures sous agitation à 150°C pour former le dimère. Le TT en HDI mesuré par dosage des fonctions isocyanates est de 4,9 %. La température du milieu réactionnel est diminuée à 110°C et 24,2 g d'hexaméthyldisilazane sont ajoutés au milieu réactionnel. La température du milieu réactionnel est alors portée à 140°C. La réaction de trimérisation est réalisée pendant 2 h 15. Le taux de transformation global de l'HDI est de 44,4 % mesuré par la méthode de dosage des fonctions isocyanates. Le catalyseur est détruit par addition de n-butanol (11,1 g) à 80°C. Après 20 minutes, le mélange réactionnel est purifié par distillation sous vide des monomères en excès et donne 765 g d'un mélange de polyisocyanates de viscosité 1848 mPa.s à 25°C, de titre NCO (en moles de NCO pour 100 g de composé) de 0,52 et de fonctionnalité 3,55.

La composition est présentée dans le tableau ci-après.

| Espèce | % en poids |
|---|---|
| HDI | 0,2 |
| Monocarbamate de n butyle et d'HDI | 0,3 |
| Dimère vrai de HDI | 7,6 |
| Trimère vrai de HDI | 46,2 |
| Bis trimère | 25,1 |
| Lourds | 20,2 |

Le polyisocyanate standard (exemple comparatif 8) présente une viscosité bien plus élevée (30 % supérieure pour l'exemple 6 et 2,5 fois supérieure pour l'exemple 5) que le mélange polyisocyanate obtenu selon l'invention et ce pour un taux de transformation en HDI bien plus faible.

On montre ainsi l'effet bénéfique de faire la réaction de dimérisation sans catalyseur de dimérisation avant la réaction de trimérisation.

On montre également que le catalyseur de trimérisation n'est pas désactivé par la présence de dimère de HDI puisque le taux de transformation de l'HDI est élevé et ce pour un même taux de catalyseur, voir un taux légèrement inférieur.

### EXEMPLE 7 :

### Synthèse d'un polyisocyanate à base trimère isocyanurate de HDI et de dimère de HDI.

On procède comme pour l'exemple 5 à la différence que l'on travaille sur 1104 g de HDI. La trimérisation est faite avec 43 g de catalyseur HMDZ et est arrêtée par addition de 15,2 g de n butanol quand le taux de transformation de l'HDI, mesuré par dosage des fonctions isocyanates et de 53%.

Après distillation des monomères de départ, le mélange polyisocyanates présente une viscosité de 4694 mPa.s à 25°C, un titre NCO (en mole de NCO pour 100 g de composé) de 0,50 et une fonctionnalité de 3,7.

Le mélange standard (exemple comparatif 9) présente une viscosité bien plus élevée (2,5 fois plus élevée) que le mélange polyisocyanate obtenu selon l'invention et ce pour un taux de transformation en HDI bien plus faible.

On montre ainsi l'effet bénéfique de la réaction de dimérisation sans catalyseur de dimérisation effectuée avant la réaction de trimérisation.

On montre également que le catalyseur de trimérisation n'est pas désactivé par la présence de dimère de HDI puisque le taux de transformation de l'HDI est élevé.

### EXEMPLE 8 :

### Synthèse d'un polyisocyanate HDT standard (exemple comparatif).

On réalise une réaction de trimérisation classique sur 5 kg d'HDI en utilisant 1,2 % (poids/poids) d'hexaméthyldisilazane comme catalyseur à 120°C pendant 2 h 30 sans faire la réaction de dimérisation avant ou après la réaction de trimérisation. Le taux de transformation (TT) de l'HDI est de 30% environ. Après blocage du catalyseur par le n butanol et élimination de l'HDI par distillation sous vide, on obtient un produit qui présente une viscosité de 2400 mPa.s, un titre NCO (en mole de NCO pour 100 g de composé) de 0,52, et une fonctionnalité de 3,4.

### EXEMPLE 9 :

### Synthèse d'un polyisocyanate HDT de haute viscosité (exemple comparatif).

On procède comme pour l'exemple 7 mais on utilise 1400 g de HDI et 2,5 % en poids de catalyseur HMDZ. La réaction est menée à 120°C pendant 2 H 15 sans faire la réaction de dimérisation avant ou après la réaction de trimérisation. On arrête la cyclotrimérisation quand le taux de transformation de l'HDI est de 54 %, par addition de 20 ml de n butanol à 80°C. Après élimination de l'HDI par distillation sous vide, on obtient un produit HDT qui présente une viscosité de 12700 mPa.s, un titre NCO (en mole de NCO pour 100 g de composé) de 0,48.

### EXEMPLE 10 :

### Préparation d'une composition d'hexaméthylène diisocyanate trimère (HDT) comprenant de l'HDI dimère

Dans une installation identique à celle de l'exemple 3, on ajoute 900 g d'HDI et 9 g d'HMDZ (1 % en poids). On chauffe le milieu réactionnel pendant 30 minutes à 140°C puis, sans bloquer la réaction, on chauffe pendant deux heures 30 à 150°C pour réaliser le dimère. A la fin de la réaction, les monomères sont évaporés. On récupère 240 g de produit final. Le taux de transformation de l'HDI est de 17,9 % après 30 minutes à 140°C et 33,6 % après 2 heures 30 à 150°C.

Les résultats des analyses de la composition du milieu réactionnel sont rapportés au tableau 4 ci-après.

**Tableau 4 :**

| Espèces | Après 30 minutes de réaction (trimérisation) | après 2 heures 30 de chauffage à 150°C (dimérisation avant distillation) |
|---|---|---|
| HDI | 82,1 % | 66,4 % |
| Dimère | 0,82 % | 3,0 % |
| Trimère | 12,7 % | 18,1 % |
| Imino-trimère | 0,73 % | 0,86 % |
| Bis-trimère | 2,8 % | 7,6 % |
| Lourds | 0,63% | 3,7% |

La composition polyisocyanate finale présente, après distillation des monomères, une viscosité à 25°C de 1 200 cps (1 200 mPa.s).

### EXEMPLE 11 :

### Etude comparative des cinétiques de formation du dimère de NBDI et du dimère de l'HDI.

De la même manière que pour l'exemple 3, on a préparé du dimère de NBDI en chauffant du NBDI à 160°C,

Les résultats sont rapportés au tableau ci-après :

| Temps en min | % dimère NBDI à 160°C | % dimère HDI à 160°C |
|---|---|---|
| 0 | 0 | 0 |
| 30 | 2,6 | 2,4 |
| 60 | 3,75 | 3,5 |
| 90 | 4,17 | 4,2 |
| 120 | 4,25 | 4,4 |
| 150 | 4,45 | 4,6 |
| 180 | 4,35 | 4,8 |

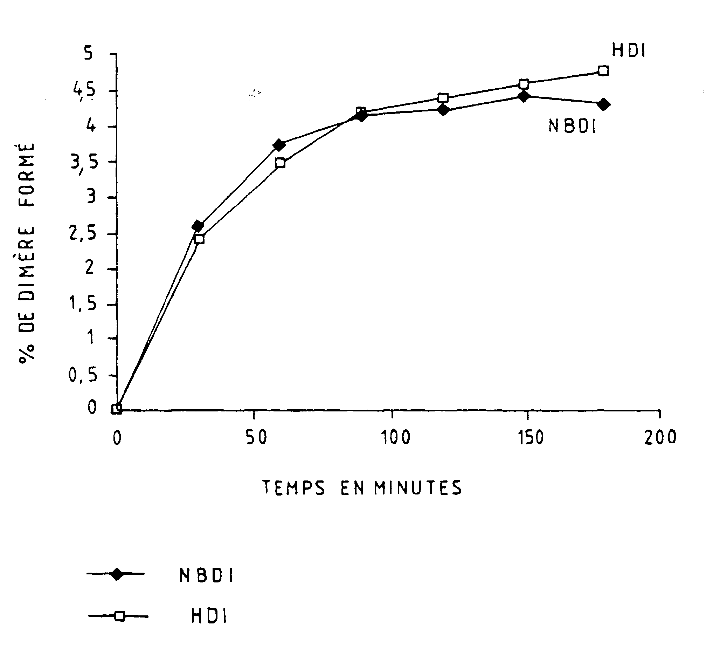

Les cinétiques respectives de formation du dimère d'HDI et du dimère de NBDI sont illustrées dans la figure annexée.

On constate que le NBDI a une réactivité comparable à celle de l'HDI pour ce qui concerne la dimérisation sans catalyseur.

### EXEMPLE 12 :

### Synthèse d'un mélange biuret de HDI (HDB) et dimère de HDI.

On chauffe 1000 g de HDI pendant 3 heures à 150°C pour faire une réaction de dimérisation (TT en HDI 5 %). On réalise sur le mélange obtenu la synthèse d'un polyisocyanate biuret telle que décrit dans la demande de brevet FR 86 12 524 (Rhône Poulenc).

Après réaction (TT en HDI de 45 %), on élimine sous vide l'HDI monomère ainsi que les autres composés volatils (solvants/catalyseur acide). Le mélange polyisocyanate contient du biuret et du dimère vrai (15% en poids) et présente une viscosité de 4500 mPa.s à 25°C et un titre NCO (en mole de NCO pour 100 g de composé) de 0,53.

A titre de comparaison un polyisocyanate HDB standard (produit commercial) obtenu par le même procédé que décrit dans le brevet mentionné ci-dessus, sans réaction de dimérisation avant ou après réaction de biurétisation, présente une viscosité de 9000 mPa.s à 25°C et un titre NCO (en mole de NCO pour 100 g de composé) de 0, 52.

Le produit HDB standard présente donc une viscosité bien plus élevée (deux fois plus élevée) que le mélange polyisocyanate obtenu par le procédé dimérisation biurétisation enchaîné.

On montre également que le catalyseur de biurétisation n'est pas désactivé par la présence de dimère de HDI.

### EXEMPLE 13 :

### Préparation d'une composition d'isophorone diisocyanate (IPDI) dimère et de carbamate de pentaérythritol et d'IPDI.

Dans un réacteur on chauffe pendant 7 heures à 150°C, 300 g d'IPDI et 0,75 g de pentaérythritol.

On analyse le mélange réactionnel obtenu et on constate la formation de 2,3 % en poids de dimère d'IPDI et de 2,5 % en poids de carbamate de pentaérythritol et d'IPDI.

### EXEMPLE 14 :

### Préparation d'une composition d'HDI dimère/prépolymère carbamate d'HDI et de pentaérythritol.

Dans un réacteur thermostaté de 61, équipé d'un agitatateur de type demi-lune, d'un réfrigérant et d'ampoules d'addition, on introduit successivement à température ambiante 4942,3 g de HDI et 100,1g de pentaérythritol, sous une atmosphère inerte d'azote.

Le milieu réactionnel est agité et chauffé progressivement à une température de 140°C. Après 1 H 50, l'analyse infra rouge sur un prélèvement de masse réactionnelle indique la présence de bandes allophanates, carbamates, et dimères. Après 2H 35 à 140°C, le milieu devient translucide avec présence d'insolubles. Après 4 H 20 de réaction, l'analyse infra rouge sur un prélèvement de masse réactionnelle indique la présence de bandes allophanates, carbamates, et une forte bande due au dimère. Après 5 h 11 de réaction à 140°C environ, on arrête le chauffage et on laisse refroidir le milieu réactionnel. On filtre les insolubles (masse récupérée de 3,7g) et la solution ainsi filtrée est distillée sur film raclant sous vide de 0,5 à 1 mbar, à une température de 160°C et avec un débit d'alimentation compris entre 1200 et 2300 ml par heure. Le produit récupéré (1340 ml) est une deuxième fois distillé dans les mêmes conditions sauf pour le débit d'alimentation qui est réduit (débit compris entre 500 et 1200 ml par heure). La masse de produit récupéré est de 819 g. Le titre en fonctions NCO est de 0,499 mole pour 100g du mélange, le pourcentage d'HDI monomère résiduel est de l'ordre de 2 %. Ce mélange subit alors une troisième distillation. On récupère ainsi 742,7 g de composition de polyisocyanates dont le titre en fonctions NCO est de 0,482 mole pour 100 g du mélange, soit un pourcentage massique de 20,24 %, le pourcentage d'HDI monomère résiduel est de 0,16 % et la viscosité du mélange brut final est de 11544 mPas à 25°C.

La composition du mélange est déterminée après chromatographie séparative et analyse structurale par infra rouge sur les fractions éluées.

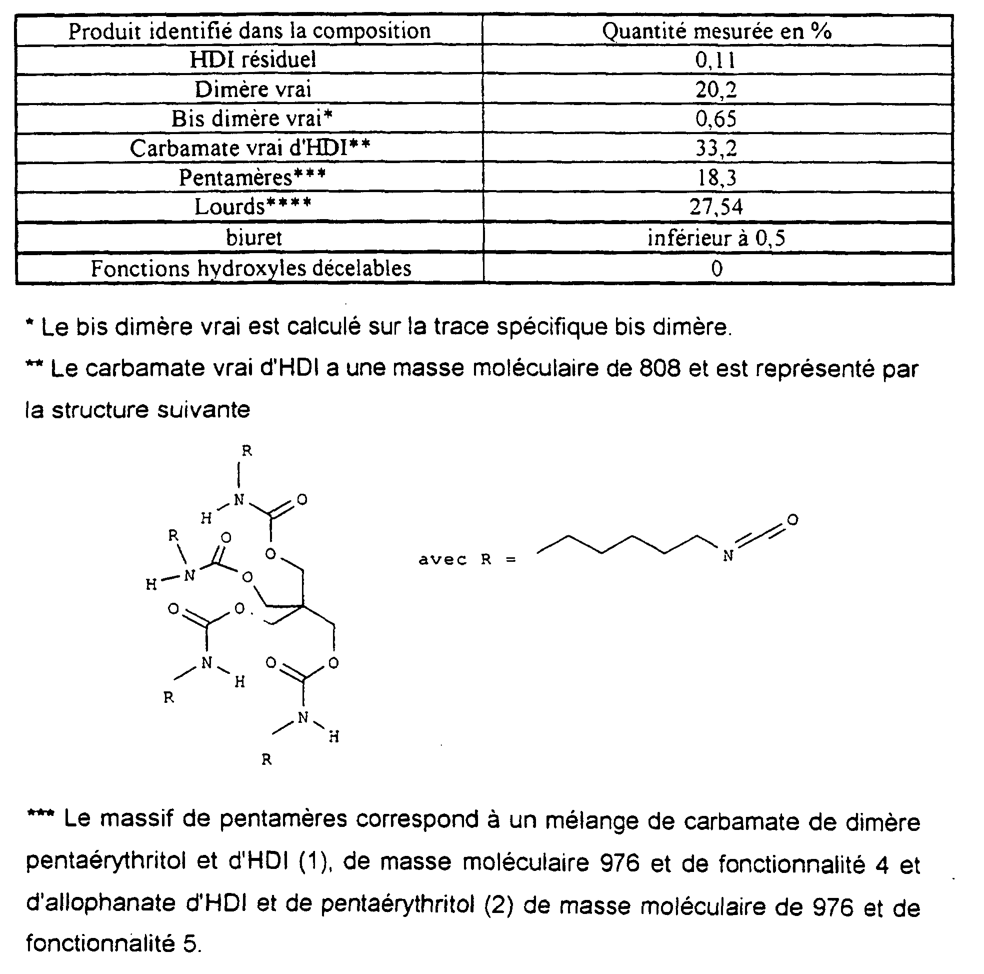

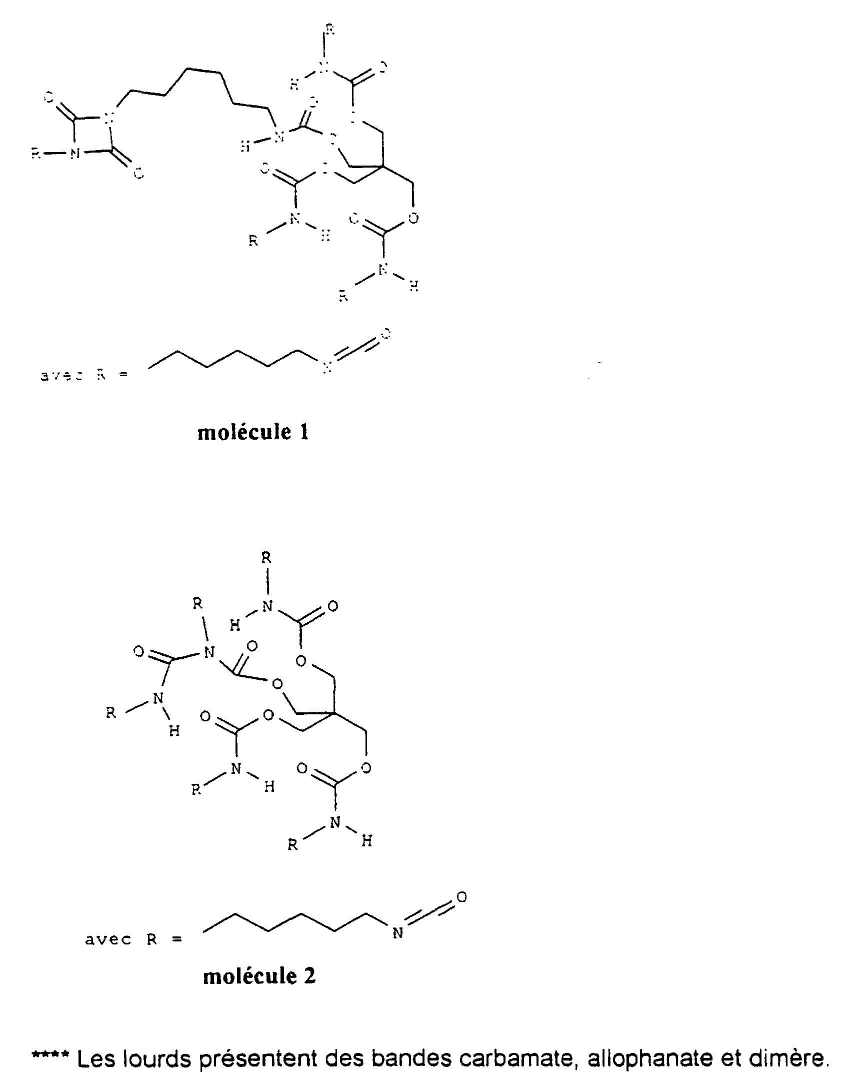

La composition finale après distillation de l'HDI présente une fonctionnalité moyenne de 4 pour une de concentration de 80 % en masse de dérivés d'HDI et de pentaétythritol et de 20 % de dimères, et ce pour une viscosité très faible pour ce type de prépolymère.

### EXEMPLE 15 :

### Préparation d'une composition d'HDI dimère/prépolymère HDI et de pentaérythritol

Le même mode opératoire que l'exemple 14 est repris.

On travaille avec 148,2 g de HDI et 3,042g de pentaérythritol avec une température du milieu réactionnel de 120°C.

L'analyse infra rouge réalisée après 1 H 50 de réaction, indique la présence de fonctions carbamates, allophanates et dimères. La bande des fonctions dimère est plus importante que la bande correspondant aux fonctions carbamates / allophanates, indiquant une forte quantité de dimère.

### EXEMPLE 16 :

### Préparation d'une composition d'HDI dimère/prépolymère HDI et de pentaérythritol.

Le même mode opératoire que l'exemple 14 est repris.

On travaille avec 148,5 g de HDI et 3,068 g de pentaérythritol avec une température du milieu réactionnel de 160°C.

L'analyse infra rouge réalisée après 1 H 28 de réaction, indique la présence de fonctions carbamates, allophanates et dimères. Cette fois, les bandes correspondant aux fonctions carbamates / allophanates sont de plus forte intensité que les bandes des fonctions dimère, ce qui indique que la quantité de dimère formé est plus faible à haute température.

### EXEMPLE 17 :

### Préparation d'une composition d'HDI dimère/prépolymère HDI et de pentaérythritol.

Le même mode opératoire que l'exemple 14 est repris.

On travaille cette fois avec un rapport HDI / OH = 5. On charge, 148,6 g de HDI et 6,016 g de pentaérythritol avec une température du milieu réactionnel comprise entre 137 et 143°C.

L'analyse infra rouge réalisée après 2H 35 de réaction, indique la présence de fonctions carbamates, allophanates et dimères. Cette fois, les bandes correspondant aux fonctions carbamates / allophanates sont de plus forte intensité que les bandes des fonctions dimère, ce qui indique que la quantité de dimère formé est plus faible.

### EXEMPLE 18 :

### Préparation d'une composition d'HDI dimère/prépolymère HDI et de pentaérythritol.

Le même mode opératoire que l'exemple 14 est repris.

On charge, 149,53 g de HDI et 1,523 g de pentaérythritol. La réaction est menée à une température du milieu réactionnel de 152°C environ pendant 7H30.

L'analyse infra rouge indique la présence de bandes correspondant aux fonctions carbamates / allophanates, et dimères.

### EXEMPLE 19 :

### Préparation d'une composition d'HDI dimère/prépolymère HDI et de triméthylolpropane.

Le même mode opératoire que l'exemple 14 est repris.

On travaille cette fois avec le triméthylolpropane. On charge, 151,01 g de HDI et 4,08 g de triméthylolpropane. Il est nécessaire de travailler à une température de réaction plus élevée pour voir la formation importante de dimère. La température du milieu réactionnel est comprise entre 140°C et 160°C.

L'analyse infra rouge indique la présence de bandes correspondant aux fonctions carbamates / allophanates, et dimères.

### EXEMPLE 20 : (exemple comparatif)

Dans un réacteur de 3 l équipé comme pour l'exemple 14, on introduit successivement 2101,5 g de HDI, 299,15g de 4,4' isopropylidène dicyclohexanol. Le mélange réactionnel est chauffé 1 heure à 80°C et 45 minutes à 102°C environ. Le produit obtenu est louvaté deux fois à une température de 160°C et sous 0,5 mbar. Le produit récupéré présente un titre en fonctions NCO de 0,288 soit 12,1 %, un titre en HDI monomère résiduel de 0,02 %. La viscosité du mélange n'a pas pu être mesurée car le produit est par trop visqueux.

L'analyse infra rouge indique que la quantité de fonctions dimères dans le produit obtenu reste relativement faible. A cette température, il convient de mener la réaction avec des durées plus longues pour obtenir des quantités substantielles de dimères en l'absence de promoteur de type pentaérythritol.

Cet exemple montre que les polyuréthannes à fonctions isocyanates obtenus selon un procédé classique donne des compositions de polyisocyanates visqueuses.

### EXEMPLES DE FORMULATIONS

### EXEMPLE 21

Une formulation de vernis a été réalisée à partir de la composition obtenue dans l'exemple 14.

Pour ce faire, un mélange de deux polyols commercialisés par la société Jäger a été utilisé. L'extrait sec (ES) est de 90 %, le titre en fonctions hydroxyles (% OH) est de 3.97 (en masse sur la masse sèche).

Ce mélange de polyols a été retenu pour ses faibles propriétés structurantes et ses capacités à réduire l'apport de solvant dans la formulation, par souci de la baisse du taux de composés organiques volatils (COV).

Deux formulations ont été réalisées: l'une avec 0.05 % de catalyseur (DBTL), et l'autre sans catalyseur.

| **Composants** | **A** | **B** |
|---|---|---|
| Jagotex F262/Jagapol PE350 (50/50 en masse) | 44.06 | 43.99 |
| Composition exemple 14 | 20.20 | 20.28 |
| DBTL (10% dans BuAc/EEP=3éthyl éthoxy propionate 8:2) | 0 | 0.30 |
| Solvant (BuAc/Solvesso 100 6:4) | 35.38 | 35.61 |

L'ajustement de viscosité a été effectué à la coupe FORD n°4, de sorte que l'on ait environ 25 secondes sur la composition avant application.

Les applications ont été réalisées au tire-films avec une barre d'application de 200µm (humide) sur plaque de verre.

Le séchage a eu lieu de la façon suivante:
* Plaques A : 30 min de séchage à température ambiante, puis 3 heures à 100°C.
* Plaques B : 30 min de séchage à température ambiante, puis 1 heure à 100°C.

Les films obtenus ont un bon tendu (légère peau d'orange) et ne présentent aucun défaut de surface par ailleurs.

La dureté du feuil a été mesurée 4 et 7 jours après l'application selon la Norme NFT 30-016 (Pendule de Persoz).

### Résultats :

| Plaques | **A** | **B** |
|---|---|---|
| ES% | 59.9 | 59.9 |
| COV (g/l) | 387 | 387 |
| Pot-Life | 30h | 1h20 |
| Dureté Persoz | | |
| To + 4j (T = 21.5°C, Hr = 55%) | 159 | 190 |
| To + 7j (T = 21.2°C, Hr = 40%) | 170 | 188 |

On remarque que les valeurs de C.O.V. sont très faibles et sont en dessous des valeurs réglementaires exigées.

### EXEMPLE 22 :

Une formulation de vernis a été réalisée à partir de la composition obtenue à l'exemple 4 par mélange des ingrédients suivants (en partie en poids)
- Polyisocyanate Ex 4 : 23
- Synocure 866 SD : 65
- Solvant (AcBu/Solvesso 100 : 60/40) : 14
- DBTL (1/1000 dans Solvesso 100) : 18

La teneur en COV de la composition était de 418 g/l.

Les vernis ont été appliqués à la jauge 200 µm sur des plaques de verre.

La dureté Persoz a été mesurée après 1, 3 et 7 jours de séchage en salle conditionnée à température ambiante (TA) sur des films n'ayant pas subi d'étuvage préalable et sur des films ayant séjourné 30 minutes à 60°C.

Les résultats sont les suivants

| Test | Dureté Persoz |
|---|---|
| To + 24 H (T. A) | 52 |
| To + 24 H (30 min, 60°C) | 69 |
| To + 3 J (T. A) | 167 |
| To + 3 J (30 min, 60°C) | 183 |
| To + 7 J (T. A) | 205 |
| To + 7 J (30 min, 60°C) | 230 |

Les revêtements polyuréthannes obtenus présentent une excellente résistance à la méthyl-éthyl cétone et aux acides.

## Revendications

1. Procédé de préparation d'une composition (poly)isocyanate comprenant au moins un isocyanate dimère à motif urétidine-dione à partir d'isocyanates monomères de départ, dans lesquels les fonctions isocyanates sont portées par des atomes de carbone sp³, **caractérisé en ce que** l'on chauffe le milieu réactionnel de départ, en l'absence de catalyseur de dimérisation, à une température d'au moins 50°C et d'au plus 200°C pendant une durée d'au plus 24 heures.

2. Procédé selon la revendication 1, **caractérisé en ce que** l'on chauffe le milieu réactionnel de départ à une température d'au moins 80°C, de préférence d'au moins 120°C et d'au plus 170°C.

3. Procédé selon la revendication 1 ou 2, **caractérisé en ce que** l'on chauffe le milieu réactionnel selon un gradient de température décroissant.

4. Procédé selon l'une quelconque des revendications précédentes, **caractérisé en ce que** la durée de chauffage est d'au moins 5 minutes, de préférence d'au moins 30 minutes, et d'au plus 24 heures, de préférence d'au plus 5 heures.

5. Procédé selon l'une quelconque des revendications précédentes, **caractérisé en ce qu'**à la fin de la réaction de dimérisation, le monomère de départ est éliminé, notamment par distillation.

6. Procédé selon l'une des revendications 1 à 4 pour la préparation en continu d'une composition comportant au moins un isocyanate dimère à motif urétidine-dione, **caractérisé en ce qu'**à l'issue de la réaction de dimérisation, on soutire les monomères n'ayant pas réagi et on les recycle vers l'étape de dimérisation.

7. Procédé de préparation d'une composition d'isocyanates polyfonctionnels comportant au moins un isocyanate trimère à motif isocyanurate et/ou biuret et au moins un isocyanate dimère à motif urétidine-dione à partir d'isocyanates monomère de départ dans lesquels les fonctions isocyanates sont portées par des atomes de carbone sp³, et éventuellement d'autres monomères comprenant les étapes suivantes:
i) on chauffe le milieu réactionnel de départ en l'absence de catalyseur de dimérisation, à une température d'au moins 80°C, de préférence d'au moins 120°C, et d'au plus 200°C, avantageusement d'au plus 170°C, pendant une durée inférieure à 24 heures, avantageusement inférieure à 5 heures;
ii) on fait réagir le mélange réactionnel de l'étape i) contenant des monomères n'ayant pas réagi avec un catalyseur de (cyclo)trimérisation ou (cyclo)condensation, dans les conditions de (cyclo)trimérisation ou (cyclo)condensation.;
iii) on élimine du mélange réactionnel de l'étape ii) les monomères de départ n'ayant pas réagi;
iv) on isole la composition d'isocyanates polyfonctionnels de faible viscosité comprenant au moins un isocyanate trimère et au moins un isocyanate dimère.

8. Procédé de préparation d'une composition d'isocyanates polyfonctionnels comportant au moins un isocyanate trimère à motif isocyanurate et/ou biuret et au moins un isocyanate dimère à motif urétidine-dione à partir d'isocyanates monomère de départ dans lesquels les fonctions isocyanates sont portées par des atomes de carbone sp³, et éventuellement d'autres monomères comprenant les étapes suivantes :
i) on fait réagir les monomères de départ, avec un catalyseur de (cyclo)trimérisation ou (cyclo)condensation, dans les conditions de (cyclo)trimérisation ou (cyclo)condensation;
ii) on chauffe le milieu réactionnel de l'étape i) contenant des isocyanates monomères n'ayant pas réagi, en l'absence de catalyseur de dimérisation, à une température d'au moins 80°C, de préférence d'au moins 120°C, et d'au plus 200°C, avantageusement d'au plus 170°C, pendant une durée inférieure à 24 heures, avantageusement inférieure à 5 heures ;
iii) on élimine du mélange réactionnel de l'étape ii) les monomères de départ n'ayant pas réagi;
iv) on isole la composition d'isocyanates polyfonctionnels de faible viscosité comprenant au moins un isocyanate trimère et au moins un isocyanate dimère.

9. Procédé de préparation d'une composition d'isocyanates polyfonctionnels comportant au moins un isocyanate dimère à motif urétidine-dione et au moins un autre composé possédant une fonction dérivée de la fonction isocyanate, à partir d'isocyanates monomères dans lesquels les fonctions isocyanates sont portées par des atomes de carbone sp³, et d'un autre composé comprenant au moins une fonction autre qu'isocyanate réactive avec la fonction isocyanate, comprenant les étapes suivantes :
i) on chauffe le milieu réactionnel de départ en l'absence de catalyseur de dimérisation, à une température supérieure à au moins 80°C, avantageusement au moins 120°C, de préférence au moins 130°C et inférieure à au moins 200°C, avantageusement au moins 170°C, pendant une durée inférieure à 24 heures, avantageusement inférieure à 5 heures ;
ii) on fait réagir le mélange réactionnel de l'étape i) contenant des monomères isocyanates n'ayant pas réagi et un composé comprenant au moins une fonction différente de la fonction isocyanate réactive avec la fonction isocyanate, éventuellement en présence d'un catalyseur;
iii) on élimine du produit réactionnel de l'étape ii) les monomères isocyanates et, le cas échéant, le composé comprenant au moins une fonction différente de la fonction isocyanate réactive avec la fonction isocyanate ;
iv) on isole la composition d'isocyanates polyfonctionnels de faible viscosité comprenant au moins un isocyanate dimère à motif urétidine-dione et au moins une autre fonction dérivée de la fonction isocyanate.

10. Procédé de préparation d'une composition polyisocyanate comprenant au moins un isocyanate dimère à motif urétidine-dione et au moins un autre composé possédant une fonction dérivée de la fonction isocyanate à partir d'isocyanates monomères dans lesquels les fonctions isocyanates sont portées par des atomes de carbone sp³, et d'un autre composé comprenant au moins une fonction autre qu'isocyanate réactive avec la fonction isocyanate, comprenant les étapes suivantes :
**i)** on fait réagir un monomère isocyanate avec un composé comprenant au moins une fonction différente d'une fonction isocyanate réactive avec la fonction isocyanate éventuellement en présence d'un catalyseur ;
ii) on chauffe le milieu réactionnel de l'étape i) contenant des monomères isocyanates n'ayant pas réagi en l'absence de catalyseur de dimérisation à une température supérieure à au moins 80°C, avantageusement au moins 120°C, de préférence au moins 130°C et inférieure à au moins 200°C,
avantageusement au moins 170°C, pendant une durée inférieure à 24 heures, avantageusement inférieure à 5 heures;
iii) on élimine du mélange réactionnel de l'étape ii) les monomères et, le cas échéant, le composé comprenant au moins une fonction différente de la fonction isocyanate réactive avec la fonction isocyanate ;
iv) on isole la composition polyisocyanate de faible viscosité comprenant au moins un polyisocyanate trimère et au moins un poyisocyanate dimère.

11. Procédé selon l'une quelconque des revendications 7 à 10, **caractérisé en ce que** l'isocyanate dimère est obtenu en chauffant le milieu réactionnel selon un gradient de température décroissant.

12. Procédé selon la revendication 9 ou 10, **caractérisé en ce que** la fonction dérivée de la fonction isocyanate est une fonction carbamate, allophanate, urée, biuret et/ou isocyanate masquée.

13. Procédé selon la revendication 9 pour la préparation d'une composition d'isocyanates polyfonctionnels comprenant au moins un isocyanate dimère urétidine-dione, et au moins un composé possédant une fonction biuret, comprenant la réaction dans l'étape ii) de monomères isocyanates avec de l'eau.

14. Procédé selon la revendication 10 pour la préparation d'une composition d'isocyanates polyfonctionnels comprenant au moins un isocyanate dimère urétidine-dione, et au moins un composé possédant une fonction biuret, comprenant la réaction dans l'étape i) de monomères isocyanates avec de l'eau.

15. Procédé selon l'une quelconque des revendications précédentes, **caractérisé en ce que**, pour la dimérisation des monomères de départ, on ajoute au milieu réactionnel contenant les monomères de départ un composé de formule générale I : 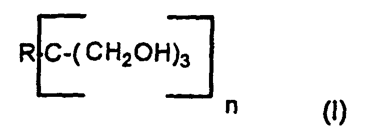 dans laquelle
R est un groupe hydrocarboné mono- ou n- valent ayant de 1 à 30 atomes de carbone, dont la chaîne hydrocarbonée peut être interrompue par un ou plusieurs atomes de chalcogènes et peut porter 1 à 3 groupes OH, et n est un nombre entier allant de 1 à 3,
et/ou des produits issus de ce dérivé par réaction avec un composé portant une fonction isocyanate aliphatique.

16. Procédé selon la revendication 15, **caractérisé en ce que** lesdits produits issus de la réaction du composé de formule générale I avec un composé portant une fonction isocyanate aliphatique correspondent aux formules générales II et/ou III suivantes : 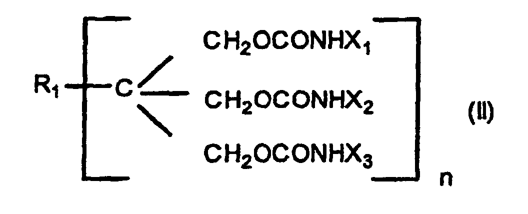 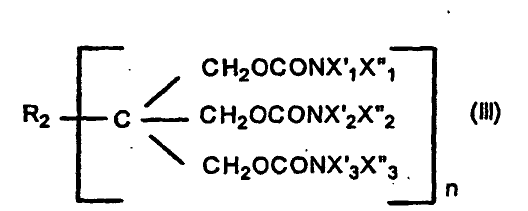 dans lesquelles
un ou plusieurs de X₁, X₂ et X₃ représente un groupe R'(-N=C=O)ₚ dans lequel R' est un groupe aliphatique p-valent et p est un nombre entier allant de 0 à 5,
les autres représentant, le cas échéant, un groupe de formule 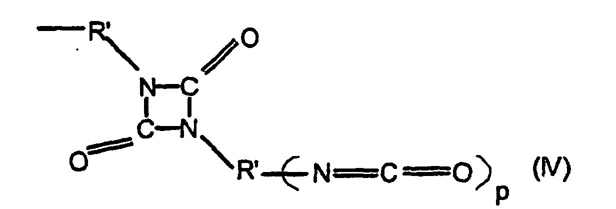 R' et p étant tels que définis ci-dessus,
R₁ est R, avec les groupes OH substitués le cas échéant par un groupe CONX₁H, X₁ étant tel que défini ci-dessus,
l'un au moins de NX'₁X"₁, NX'₂X"₂ et NX'₃X"₃ représente le groupe 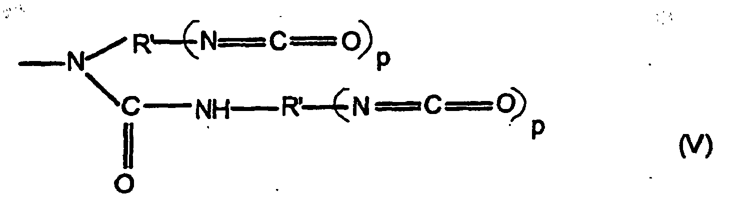 R' et p étant tels que définis précédemment, les autres représentant un groupe NX₁H ou NX₁-silyle avec X₁ tel que défini précédemment, et
R₂ étant R, avec les groupes OH substitués le cas échéant par un groupe CONX₁H ou 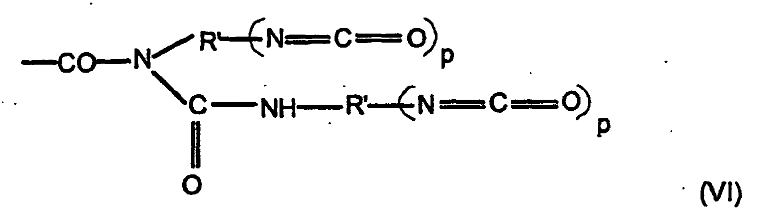 R' et p étant tels que définis ci-dessus, et
n est un nombre entier allant de 1 à 3.

17. Procédé selon la revendication 15 ou la revendication 16, **caractérisé en ce que** R est un groupe alkyle en C₁-C₄ substitué par 1 à 3 groupes OH.

18. Procédé selon l'une quelconque des revendications 15 à 17, **caractérisé en ce que** le composé de formule générale I est choisi parmi le pentaérythritol et le triméthylolpropane, et les composés de formule générale II et III sont choisis le cas échéant parmi les dérivés correspondants du pentaérythritol et du triméthylolpropane tels que définis à la revendication 16.

19. Procédé selon l'une quelconque des revendications précédentes, **caractérisé en ce que** les isocyanates monomères de départ sont des diisocyanates choisis parmi l'hexaméthylène diisocyanate, le tétraméthylène diisocyanate, le norbomane diméthylène diisocyanate, l'isophorone diisocyanate, le bis-isocyanato-cyclohexylméthane et le 2-méthyl pentaméthylène diisocyanate.

20. Utilisation d'un composé de formule générale I : 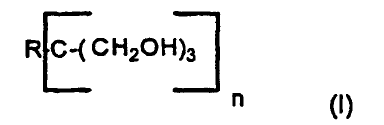 dans laquelle
R est un groupe hydrocarboné mono- ou n- valent ayant de 1 à 30 atomes de carbone, dont la chaîne hydrocarbonée peut être interrompue par un ou plusieurs atomes de chalcogènes et peut porter 1 à 3 groupes OH, et n est un nombre entier allant de 1 à 3,
et/ou des produits issus de ce dérivé par réaction avec un composé portant une fonction isocyanate aliphatique,
pour la préparation d'isocyanates dimères de formule (X) 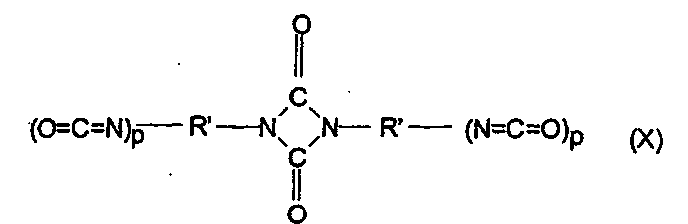 dans laquelle R' représente une chaîne aliphatique ayant de 3 à 30 atomes de carbone, de valence p+1 où p représente un nombre entier compris entre 0 et 5, à partir d'isocyanates aliphatiques monomères de formule (VII)
R'-(N=C=O)ₚ₊₁
R' et p étant tels que définis ci-dessus,
avec un taux de conversion d'au moins 5 %, de préférence au moins 10 % des fonctions isocyanates de départ en fonctions urétidine diones,
le rapport motifs dimères vrais (correspondants à la formule X) / total des fonctions isocyanates étant inférieur ou égal à 30 % (masse/masse), avantageusement inférieur à 15%, de préférence inférieur à 12 % (masse/masse).

21. Utilisation selon la revendication 20, **caractérisée en ce que** lesdits produits issus de la réaction du composé de formule générale I avec un composé portant une fonction isocyanate aliphatique répondent aux formules générales II et/ou III suivantes : 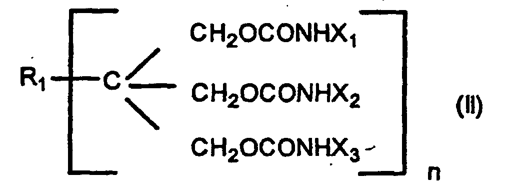 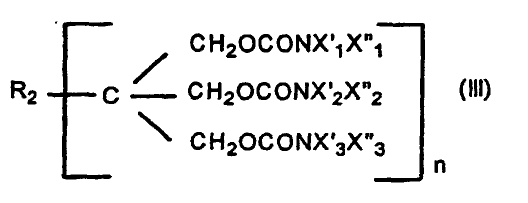 dans lesquelles
un ou plusieurs de X₁, X₂ et X₃ représente un groupe R'(-N=C=O)ₚ dans lequel R' est un groupe aliphatique p valent et p est un nombre entier allant de 0 à 5,
les autres représentant, le cas échéant, un groupe de formule 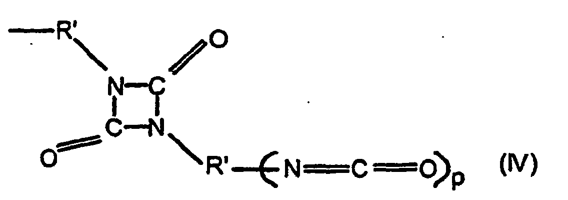 R' et p étant tels que définis ci-dessus,
R₁ est R, avec les groupes OH substitués le cas échéant par un groupe CONX₁H, X₁ étant tel que défini ci-dessus,
l'un au moins de NX'₁X"₁, NX'₂X"₂ et NX'₃X"₃ représente le groupe 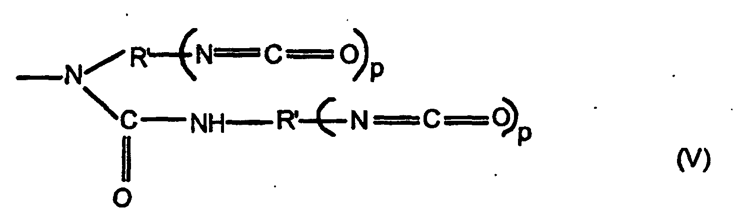 R' et p étant tels que définis précédemment, les autres représentant un groupe NX₁H ou NX₁-silyle avec X₁ tel que défini précédemment, et
R₂ étant R, avec les groupes OH substitués, le cas échéant, par un groupe CONX₁H ou 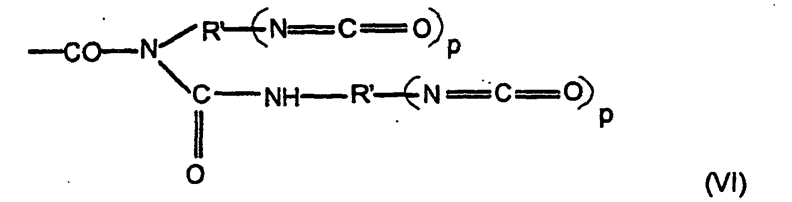 R' et p étant tels que définis ci-dessus, et
n est un nombre entier allant de 1 à 3,
pour la préparation de composés dimères de formule générale X : 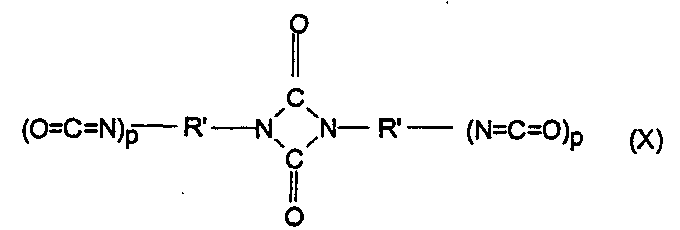 dans laquelle R' et p sont tels que définis à la revendication 20, à partir d'isocyanates monomères de formule générale VII :
R'-(N=C=O)ₚ₊₁ (VII)
R' et p étant tels que définis ci-dessus, avec un taux de transformation d'avantageusement 5 %, de préférence 10 % au moins des fonctions isocyanates en composés de formule X.

22. Utilisation selon la revendication 20 ou la revendication 21, **caractérisée en ce que** R est un groupe alkyle en C₁-C₄ substitué par 1 à 3 groupes OH.

23. Utilisation selon la revendication 21, **caractérisée en ce que** le composé de formule générale I est choisi parmi le pentaérythritol et le triméthylolpropane, et les composés de formule générale II et III sont choisis le cas échéant parmi les dérivés correspondants du pentaérythritol et du triméthylolpropane tels que définis à la revendication 21.

24. Utilisation selon la revendication 21, **caractérisée en ce que** la réaction de préparation des composés de formule générale X à partir des composés de formule générale VII est effectuée dans un milieu réactionnel comprenant en outre des composés de formule générale VIII : 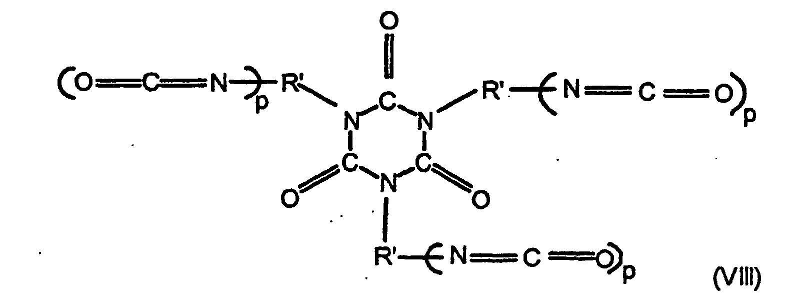 dans laquelle R' et p sont tels que définis à la revendication 21.

25. Utilisation selon la revendication 21, **caractérisée en ce que** le composé de formule générale I, et/ou II, et/ou III est fixé sur un support, notamment une résine.

26. Composition d'isocyanates polyfonctionnels comprenant au moins un isocyanate dimère urétidine-dione et au moins un composé possédant une fonction biuret, **caractérisée en ce que** le composé possédant une fonction biuret représente au moins 3 %, avantageusement au moins 10 %, de manière préférée au moins 20 % en poids de la composition,
le rapport motifs dimères vrais (correspondants à la formule X) / total des fonctions isocyanates étant inférieur ou égal à 30 % (masse/masse), avantageusement inférieur à 15 %, de préférence inférieur à 12 % (masse/masse).

27. Composition selon la revendication 26 dans laquelle le rapport motifs dimères vrais (correspondants à la formule X) / total des fonctions isocyanates est supérieur à 3,5 % avantageusement supérieur à 5% dans le cas des isocyanurates.

28. Composition selon la revendication 27 dans laquelle le rapport motifs dimères vrais (correspondants à la formule X) / total des fonctions isocyanates est supérieur à 5 %, lorsque la composition comporte un isocyanurate.

29. Composition comprenant au moins un composé de formule générale X : 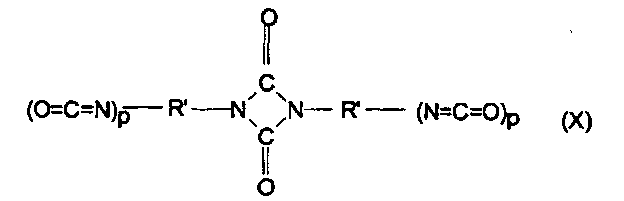 dans laquelle R' et p sont tels que définis à la revendication 21,
et au moins un composé de formule générale II : 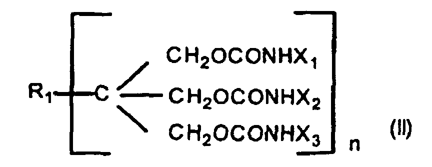 dans laquelle un ou plusieurs de X₁, X₂ et X₃ représente un groupe -R'-N=C=O tel que défini ci-dessus et les autres représentent, le cas échéant, un groupe 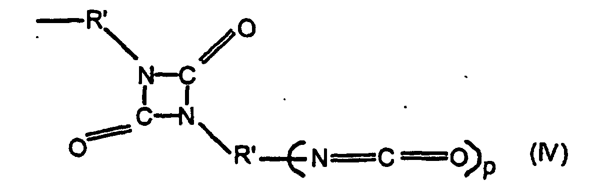 R' et p étant tels que définis ci-dessus,
et R₁ est R, avec les groupes OH substitués le cas échéant par un groupe CONX₁H tel que défini ci-dessus,
et n étant un nombre entier de 1 et 3;
et/ou au moins un composé de formule générale III : 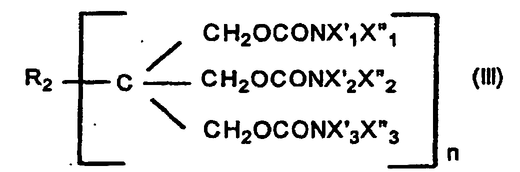 dans laquelle l'un au moins de NX'₁X''₁, NX'₂X''₂ et NX'₃X''₃ représente le groupe 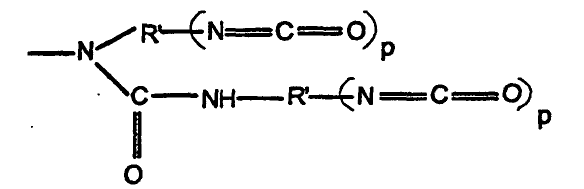 R' et p étant tels que définis précédemment, les autres représentant un groupe NX₁H avec X₁ tel que défini précédemment, et
R₂ étant R, avec les groupes OH substitués par un groupe CONX₁H ou 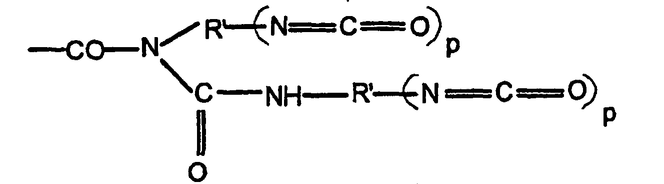 tels que définis ci-dessus,
et n est un nombre entier allant de 1 à 3,
et/ou un composé biuret obtenu à partir d'un isocyanate de formule générale VI telle que définie à la revendication 21, ladite composition étant en outre
**caractérisée en ce qu'**elle est exempte de catalyseur de dimérisation de type phosphine, aminopyridine, phosphoramide, organométallique et amine tertiaire.

30. Composition selon la revendication 29, **caractérisée en ce qu'**elle comprend en outre un composé de formule générale VIII : 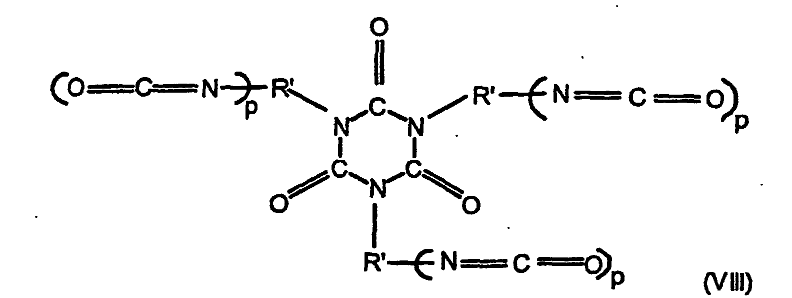 R' et p étant tels que définis dans la revendication 21
et/ou un composé de formule générale XIII 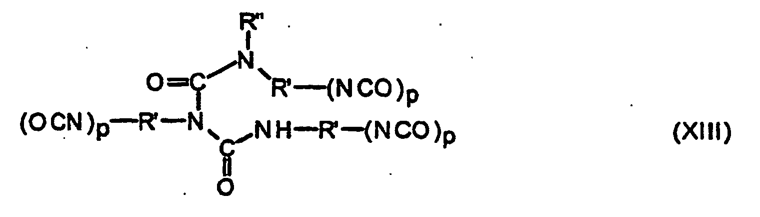 dans laquelle R" représente H ou un groupe hydrocarboné et R' et p sont tels que définis précédemment.

31. Composition comprenant au moins un composé de formule générale X telle que définie à la revendication 29 et/ou éventuellement un composé de formule générale VIII telle que définie à la revendication 30 et/ou au moins un composé de formule générale XIII telle que définie à la revendication 24, ladite composition étant exempte de. catalyseurs de dimérisation.

32. Composé de formule générale III telle que définie à la revendication 16 dans laquelle au moins un des groupes NX'1X"1, NX'2X"2 et NX'3X"3 représente le groupe de formule V telle que définie précédemment, les autres représentant un groupe NX1H avec X1, X'1X"1, X'2X"2, X'3X"3 tels que définis à la revendication 16 et R1 tel que défini à la revendication 16, à savoir représentant un groupe R avec les groupes OH substitués le cas échéant par un groupe CO-NX1 H ou un groupe de formule V, telle que définie à la revendication 16.

33. Composé de formule générale III telle que définie à la revendication 16, dans laquelle
- les groupes NX'₁X"₁, NX'₂X"₂ et NX'₃X"₃ sont choisis parmi un groupe de formule générale NX₁H, un groupe de formule générale V telle que définie précédemment, un groupe urétidine dione de formule IV, un groupe isocyanurate de formule XI 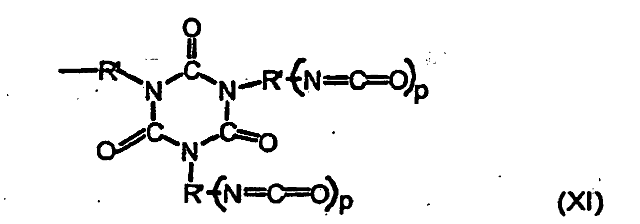
R' et p étant tels que définis à la revendication 16, un groupe biuret de formule XII 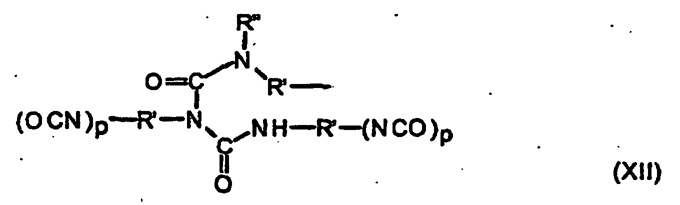 R' et p étant tels que définis à la revendication 16,
R" représente H ou un groupe hydrocarboné,
R₂ représente le groupe R avec les groupes OH substitués le cas échéant par un groupe choisi parmi - CONHX₁H, un groupe de formule VI, un groupe de formule -CO-NH- (groupe de formule IV), -CO-NH-(groupe de formule XI) et -CO-NH- (groupe de formule XII)
sous réserve que les composés comportent au moins un groupe carbamate de formule NX₁H, respectivement CONHX₁H et/ou allophanate de formule V, respectivement -CO-NH- (groupe de formule V) et au moins un groupe choisi parmi le groupe urétidine dione de formule générale IV, respectivement -CO-NH- (groupe de formule générale IV), un groupe isocyanurate de formule générale XI, respectivement -CO-NH- (groupe de formule générale XI) et un groupe biuret de formule générale XII, respectivement -CO-NH (groupe de formule générale XII).

34. Composés selon la revendication 32 ou la revendication 33 dans lesquels p est égal à 1 et comportant 1,2,3 ou 4 groupes allophanates.

35. Composés selon la revendication 32 ou la revendication 33 **caractérisés en ce que** R' est un groupe choisi parmi un groupe (CH₂)ₙ avec n variant de 2 à 8, éventuellement substitué par une chaîne hydrocarbonée éventuellement portant une fonction isocyanate, un groupe norbornylméthylène, cyclohexylméthylène et 3,3,5-triméthyl cyclohexyl méthylène.

36. Utilisation d'une composition selon la revendication 29 ou la revendication 30 , pour la préparation d'un revêtement polyuréthanne.

37. Composition pour application simultanée ou successive comprenant :
- au moins une composition polyisocyanate comprenant au moins un isocyanate dimère urétidine-dione et au moins un composé possédant une fonction biuret, composition dans laquelle le rapport motifs dimères vrais (correspondants à la formule X) / total des fonctions isocyanates étant inférieur ou égal à 30 % (masse/masse), avantageusement inférieur à 15 %, de préférence inférieur à 12 % (masse/masse), et
- un polyol.

38. Composition selon la revendication 37, **caractérisée en ce que** le polyol est un polyol de type acrylate répondant aux conditions suivantes pour un extrait sec (ES) compris entre 75-80%, en poids :
- Mw (poids moléculaire moyen en poids) non supérieur à 10000, avantageusement non supérieur à 5000, de préférence non supérieur à 2000 ;
- Mn (poids moléculaire moyen en nombre) non supérieur à 5000, avantageusement non supérieur à 3000, de préférence non supérieur à 800 ;
- Mw/Mn (rapport de dispersité) non supérieur à 5, avantageusement non supérieur à 3, de préférence non supérieur à 2 ;
- nombre d'OH/molécule supérieur ou égal à 2, avantageusement supérieur à 2.

39. Composition selon la revendication 37, **caractérisée en ce que** le polyol est un polyol de type polyester ayant 100 % d'extrait sec et une viscosité non supérieure à 10000 mPa.s, avantageusement non supérieure à 5000 mPa.s, de préférence non supérieure à 1000 Pa.s, et un Mw compris entre 250 et 8000.

40. Composition selon l'une des revendications 37 à 39 comportant un catalyseur de réticulation, éventuellement latent.

## Claims

1. Process for preparing a (poly)isocyanate composition comprising at least one dimeric isocyanate with a uretidine-dione motif from starting monomeric isocyanates wherein the isocyanate functions are carried by sp³ carbon atoms, **characterised in that** the starting reaction medium is heated, in the absence of a dimerisation catalyst, to a temperature of at least 50°C and at most 200°C for a period of at most 24 hours.

2. Process according to claim 1, **characterised in that** the starting reaction medium is heated to a temperature of at least 80°C, preferably at least 120°C and at most. 170°C.

3. Process according to claim 1 or 2, **characterised in that** the starting reaction medium is heated according to a decreasing temperature gradient.

4. Process according to any one of the preceding claims, **characterised in that** the heating period is at least 5 minutes, preferably at least 30 minutes and at most 24 hours, preferably at most 5 hours.

5. Process according to any one.of the preceding claims, **characterised in that** at the end of the reaction of dimerisation the starting monomer is eliminated, particularly by distillation.

6. Process according to one of claims 1 to 4 for continuous preparation of a composition comprising at least one dimeric isocyanate with a uretidine-dione motif, **characterised in that** at the end of the reaction of dimerisation, the unreacted monomers are removed and recycled into the dimerisation step.

7. Process for preparing a polyfunctional isocyanate composition comprising at least one trimeric isocyanate with an isocyanate and/or biuret motif and at least one dimeric isocyanate with a uretidine-dione motif, from starting monomeric isocyanates wherein the isocyanate functions are carried by sp³ carbon atoms, and optionally other monomers comprising the following steps:
i) the starting reaction medium is heated, in the absence of any dimerisation catalyst, to a temperature of at least 80°C, preferably at least 120°C, at most 200°C, advantageously at most 170°C, for a period of less than 24 hours, advantageously less than 5 hours;
ii) the reaction mixture of step i) containing unreacted monomers is reacted with a (cyclo)trimerisation or (cyclo)condensation catalyst under (cyclo)trimerisation or (cyclo)condensation conditions;
iii) the unreacted starting monomers are eliminated from the reaction mixture of step ii);
iv) the low viscosity polyfunctional isocyanate composition comprising at least one trimeric isocyanate and at least one dimeric isocyanate is isolated.

8. Process for preparing a polyfunctional isocyanate composition comprising at least one trimeric isocyanate with an isocyanurate and/or biuret motif and at least one dimeric isocyanate with a uretidine-dione motif from starting monomeric isocyanates wherein the isocyanate functions are carried by sp³ carbon atoms, and optionally other monomers, comprising the following steps:
i) the starting monomers are reacted with a (cyclo)trimerisation or (cyclo)condensation catalyst under (cyclo)trimerisation or (cyclo)condensation conditions;
ii) the reaction medium of step i) containing unreacted isocyanate monomers is heated, in the absence of a dimerisation catalyst, to a temperature of at least 80°C, preferably at least 120°C and at most 200°C, advantageously at most 170°C, for a period of less than 24 hours, advantageously less than 5 hours;
iii) the unreacted starting monomers are eliminated from the reaction mixture of step ii);
iv) the low viscosity polyfunctional isocyanate composition comprising at least one trimeric isocyanate and at least one dimeric isocyanate is isolated.

9. Process for preparing a polyfunctional isocyanate composition comprising at least one dimeric isocyanate with a uretidine-dione motif and at least one other compound having a function derived from the isocyanate function, from monomeric isocyanates wherein the isocyanate functions are carried by carbon atoms sp³, and another compound having at least one function other than an isocyanate which is reactive with the isocyanate function, comprising the following steps:
i) the starting reaction medium is heated, in the absence of any dimerisation catalyst, to a temperature greater than at least 80°C, advantageously at least 120°C, preferably at least 130°C and less than at least 200°C, advantageously.at least 170°C, for a period of less than 24 hours, advantageously less than 5 hours;
ii) the reaction mixture of step i) containing unreacted isocyanate monomers and a compound comprising at least one function which is different from the isocyanate function which is reactive with the isocyanate function are reacted, optionally in the presence of a catalyst;
iii) the isocyanate monomers and, if applicable, the compound comprising at least one function which is different from the isocyanate function which is reactive with the isocyanate function are eliminated from the reaction product of step ii);
iv) the low viscosity polyfunctional isocyanate composition comprising at least one dimeric isocyanate with a uretidine-dione motif and at least one other function derived from the isocyanate function is isolated.

10. Process for preparing a polyisocyanate composition comprising at least one dimeric isocyanate with a uretidine-dione motif and at least one other compound having a function derived from the isocyanate function, from monomeric isocyanates wherein the isocyanate functions are carried by sp³ carbon atoms, and another compound having at least one function other than an isocyanate which is reactive with the isocyanate function, comprising the following steps:
i) an isocyanate monomer is reacted with a compound having at least one function other than an isocyanate function which is reactive with the isocyanate function, optionally in the presence of a catalyst;
ii) the reaction medium of step i) containing unreacted isocyanate monomers is heated, in the absence of a dimerisation catalyst, to a temperature above at least 80°C, advantageously at least 120°C, preferably at least 130°C and less than at least 200°C, advantageously at least 170°C, for a period of less than 24 hours, advantageously less than 5 hours;
iii) the monomers and, if applicable, the compound comprising at least one function which is different from the isocyanate function which is reactive with the isocyanate function are eliminated from the reaction mixture of step ii) ;
iv) the low viscosity polyisocyanate composition comprising at least one trimeric polyisocyanate and at least one dimeric polyisocyanate is isolated.

11. Process according to any one of claims 7 to 10, **characterised in that** the dimeric isocyanate is obtained by heating the reaction medium according to a decreasing temperature gradient.

12. Process according to claim 9 or 10, **characterised in that** the function derived from the isocyanate function is a carbamate, allophanate, urea, biuret and/or masked isocyanate function.

13. Process according to claim 9 for preparing a polyfunctional isocyanate composition comprising at least one dimeric uretidine-dione isocyanate and at least one compound having a biuret function, comprising reacting isocyanate monomers with water in step ii).

14. Process according to claim 10 for preparing a polyfunctional isocyanate composition comprising at least one dimeric uretidine-dione isocyanate and at least one compound having a biuret function, comprising reacting isocyanate monomers with water in step i).

15. Process according to one of the preceding claims, **characterised in that**, for the dimerisation of the starting monomers, a compound of general formula I : 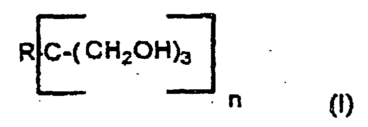 wherein R is a mono- or n-valent hydrocarbon group having 1 to 30 carbon atoms, the hydrocarbon chain of which may be interrupted by one or more chalcogenide atoms and may carry 1 to 3 OH groups, and n is an integer from 1 to 3,
and/or products obtained from this derivative by reaction with a compound carrying an aliphatic isocyanate function,
is or are added to the reaction medium containing the starting monomers.

16. Process according to claim 15, **characterised in that** said products obtained from the reaction of the compound of general formula I with a compound carrying an aliphatic isocyanate function correspond to the following general formulae II and/or III: 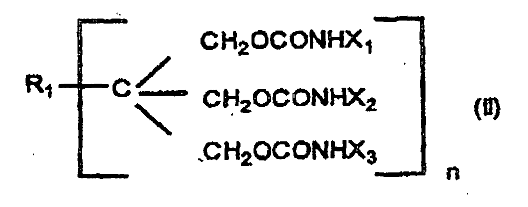 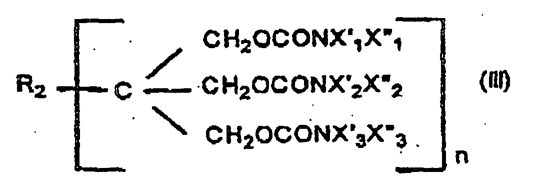 wherein
one or more of X₁, X₂ and X₃ denotes a group R'(-N=C=O)ₚ wherein R' is a p-valent aliphatic group and p is an integer from 0 to 5, the others optionally representing a group of formula 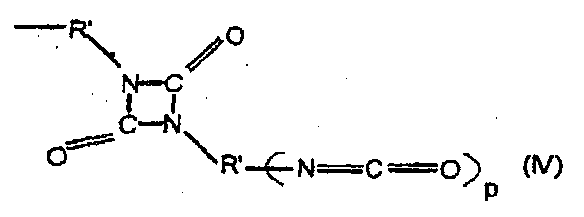 where R' and p are as hereinbefore defined,
R₁ is R, with the groups OH optionally substituted by a group CONX₁H, X₁ being as hereinbefore defined,
at least one of NX'₁X"₁, NX'₂X''₂ and NX'₃X"₃ represents the group 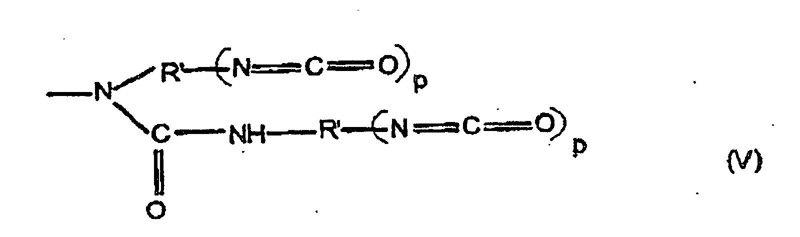 where R' and p are as hereinbefore defined, the others representing a group NX₁H or NX₁-silyl where X₁ is as hereinbefore defined, and
R₂ being R, with the OH groups optionally substituted by a group CONX₁H or 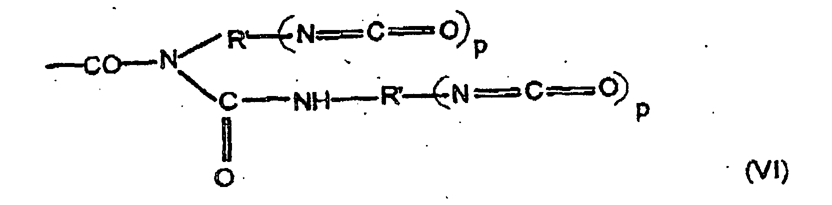 where R' and p are as hereinbefore defined, and
n is an integer from 1 to 3.

17. Process according to claim 15 or claim 16, **characterised in that** R is a C₁₋₄alkyl group substituted by 1 to 3 OH groups.

18. Process according to one of claims 15 to 17, **characterised in that** the compound of general formula I is selected from among pentaerythritol and trimethylolpropane, and the compounds of general formula II and III are optionally selected from among the corresponding derivatives of pentaerythritol and trimethylolpropane as defined in claim 16.

19. Process according to any one of the preceding claims, **characterised in that** the starting monomeric isocyanates are diisocyanates selected from among hexamethylene diisocyanate, tetramethylene diisocyanate, norbornane dimethylene diisocyanate, isophorone diisocyanate, bis-isocyanato-cyclohexylmethane and 2-methyl-pentamethylene diisocyanate.

20. Use of a compound of general formula I: 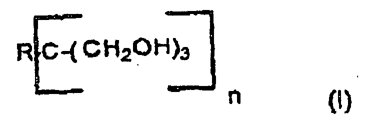 wherein
R is a mono- or n-valent hydrocarbon group having 1 to 30 carbon atoms, the hydrocarbon chain of which may be interrupted by one or more chalcogenide atoms and may carry 1 to 3 OH groups, and n is an integer from 1 to 3,
and/or products obtained from this derivative by reaction with a compound carrying an aliphatic isocyanate function,
for the preparation of dimeric isocyanates of formula (X) 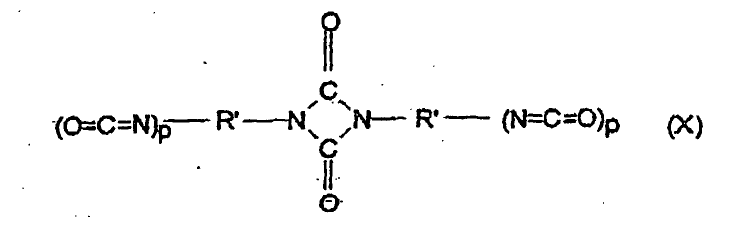 wherein R' denotes an aliphatic chain having 3 to 30 carbon atoms of valence p+1 where p denotes an integer from 0 and 5, from monomeric aliphatic isocyanates of formula (VII)
R'-(N=C=O)ₚ₊₁
where R' and p are as hereinbefore defined,
with a conversion level of at least 5%, preferably at least 10% of the starting isocyanate functions into uretidine dione functions,
the ratio of true dimeric motifs (corresponding to formula X)/total of the isocyanate functions being less than or equal to 30% (mass/mass), advantageously less than 15% and preferably less than 12% (mass/mass).

21. Use according to claim 20, **characterised in that** the products obtained from the reaction of the compound of general formula I with a compound carrying an aliphatic isocyanate function correspond to the following general formulae II and/or III: 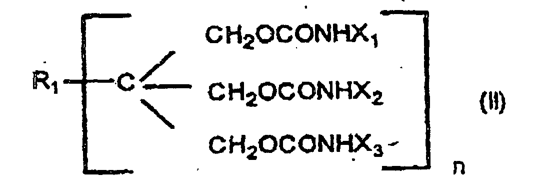 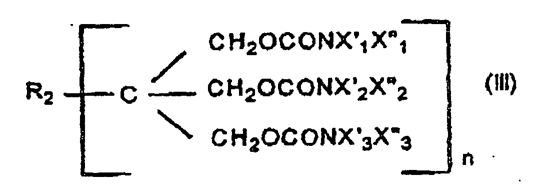 wherein
one or more of X₁, X₂ and X₃ denote a group R'(-N=C=O)ₚ wherein R' is a p-valent aliphatic group and p is an integer from 0 to 5, the others optionally representing a group of formula 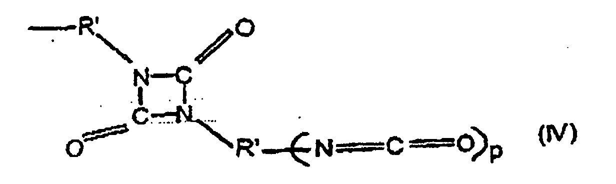 where R' and p are as hereinbefore defined,
R' is R, with the OH groups optionally substituted by a group CONX₁H, where X₁ is as hereinbefore defined,
at least one of NX'₁X"₁, NX'₂X"₂ and NX'₃X''₃ represents the group 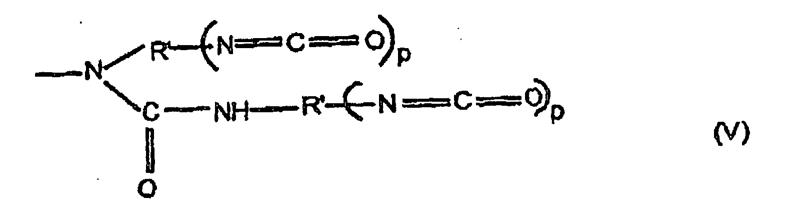 where R' and p are as hereinbefore defined, the others representing a group NX₁H or NX₁-silyl where X₁ is as hereinbefore defined, and
R₂ being R, with the OH groups optionally substituted by a group CONX₁H or 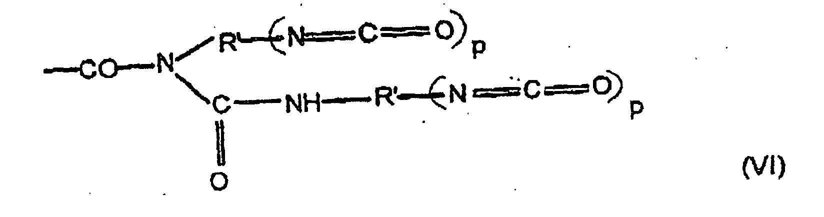 where R' and p are as hereinbefore defined, and
n is an integer from 1 to 3,
for the preparation of dimeric compounds of general formula X: 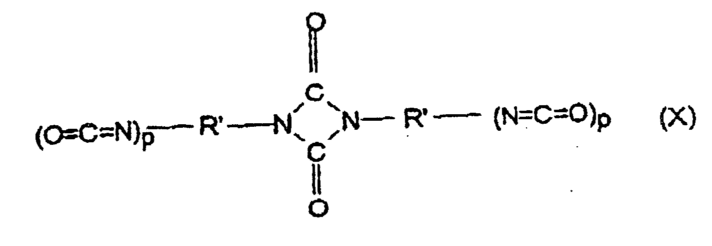 wherein R' and p are defined as in claim 20, from monomeric isocyanates of general formula VII:
R¹ - (N=C=O)ₚ₊₁ (VII)
where R' and p are as hereinbefore defined, with a conversion level of advantageously 5%, preferably at least 10% of the isocyanate functions into compounds of formula x.

22. Use according to claim 20 or claim 21, **characterised in that** R is a C₁₋₄ alkyl group substituted by 1 to 3 OH groups.

23. Use according to claim 21, **characterised in that** the compound of general formula I is selected from among pentaerythritol and trimethylolpropane, and the compounds of general formula II and III are optionally selected from among the corresponding derivatives of pentaerythritol and trimethylolpropane as defined in claim 21.

24. Use according to claim 21, **characterised in that** the reaction for preparing the compounds of general formula X from the compounds of general formula VII is carried out in a reaction medium further comprising compounds of general formula VIII : 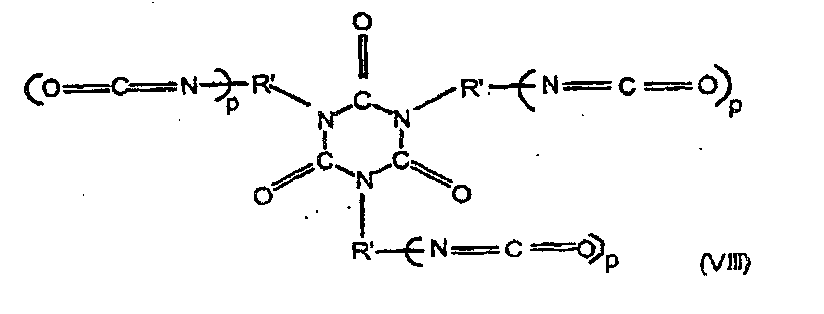 wherein R' and p are as defined in claim 21.

25. Use according to claim 21, **characterised in that** the compound of general formula I and/or II and/or III is fixed to a support, particularly a resin.

26. Polyfunctional isocyanate composition comprising at least one dimeric uretidine-dione isocyanate and at least one compound having a biuret function, **characterised in that** the compound having a biuret function constitutes at least 3%, advantageously at least 10%, preferably at least 20% by weight of the composition,
the ratio of true dimeric motifs (corresponding to formula X)/total of the isocyanate functions being less than or equal to 30% (mass/mass), advantageously less than 15% and preferably less than 12% (mass/mass).

27. Composition according to claim 26 wherein the ratio of true dimeric motifs (corresponding to formula X)/total of the isocyanate functions is greater than 3.5%, advantageously greater than 5% in the case of the isocyanurates.

28. Composition according to claim 27, wherein the ratio of true dimeric motifs (corresponding to formula X)/total of the isocyanate functions is greater than 5%, when the composition comprises an isocyanurate.

29. Composition comprising at least one compound of general formula X: 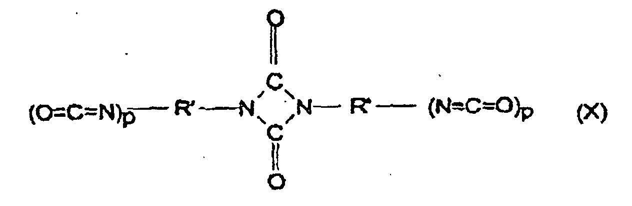 wherein R' and p are as defined in claim 21,
and at least one compound of general formula II: 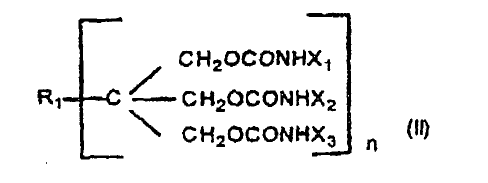 wherein one or more of X₁, X₂ and X₃ denotes a group -R'-N=C=O as hereinbefore defined and the others represent, if applicable, a group 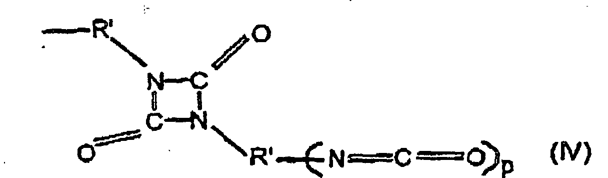 where R' and p are as hereinbefore defined,
and R₁ is R, with the groups OH optionally substituted by a group CONX₁H as hereinbefore defined,
and n is an integer from 1 to 3;
and/or at least one compound of general formula III: 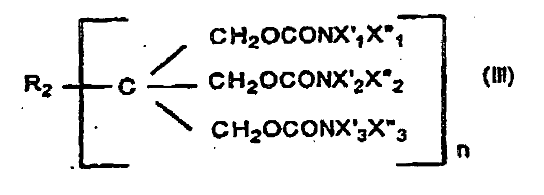 wherein at least one of NX'₁X"₁, NX'₂X"₂ and NX'₃X"₃ represents the group 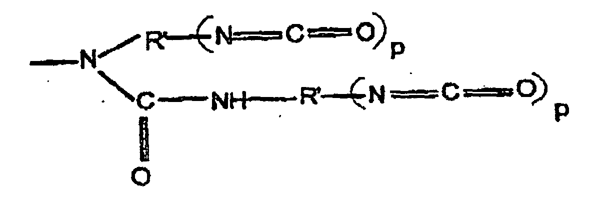 where R' and p are as hereinbefore defined, the others representing a group NX₁H where X₁ is as hereinbefore defined, and
R₂ being R, with the OH groups optionally substituted by a group CONX₁H or 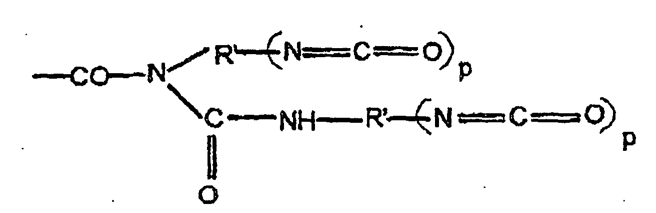 as hereinbefore defined,
and n is an integer from 1 to 3,
and/or a biuret compound obtained from an isocyanate of general formula VI as defined in claim 21, said composition being further **characterised in that** it is free from dimerisation catalyst of the phosphine, aminopyridine, phosphoramide, organometallic or tertiary amine type.

30. Composition according to claim 29, **characterised in that** it further comprises a compound of general formula VIII : 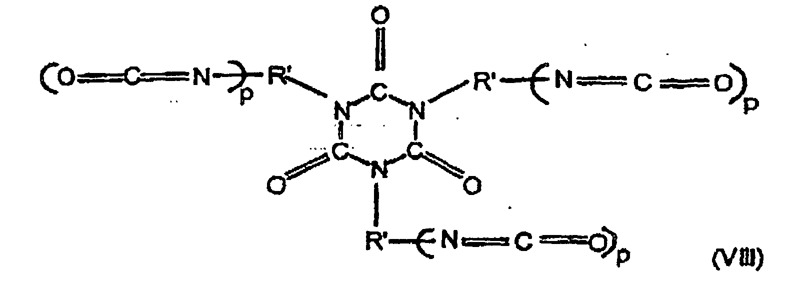 wherein R' and p are as defined in claim 21,
and/or a compound of general formula XIII 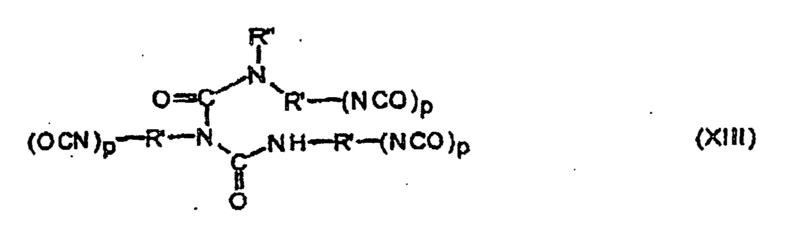 wherein R" denotes H or a hydrocarbon group and R' and p are as hereinbefore defined.

31. Composition comprising at least one compound of general formula X as defined in claim 29 and/or optionally a compound of general formula VIII as defined in claim 30 and/or at least one compound of general formula XIII as defined in claim 24, said composition being free from dimerisation catalysts.

32. Compound of general formula III as defined in claim 16 wherein at least one of the groups NX'₁X"₁, NX'₂X"₂ and NX'₃X"₃ represents the group of formula V as hereinbefore defined, the others representing a group NX₂H wherein X₁, X'₁X"₁, X'₂X"₂ and X'₃X"₃ are as defined in claim 16 and R₁ is as defined in claim 16, i.e. representing a group R with the OH groups optionally substituted by a group CO-NX₁H or a group of formula V as defined in claim 16.

33. Compound of general formula III as defined in claim 16, wherein
- the groups NX'₁X"₁, NX'₂X"₂ and NX'₃X"₃ are selected from among a group of general formula NX₁H, a group of general formula V as hereinbefore defined, a uretidine dione group of formula IV, an isocyanurate group of formula XI 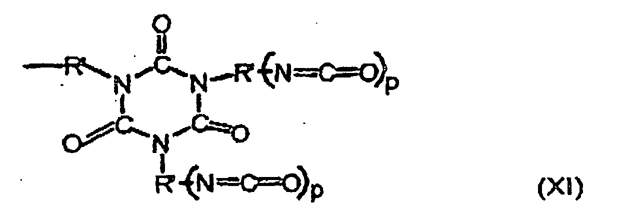
wherein R' and p are as defined in claim 16, a biuret group of formula XII 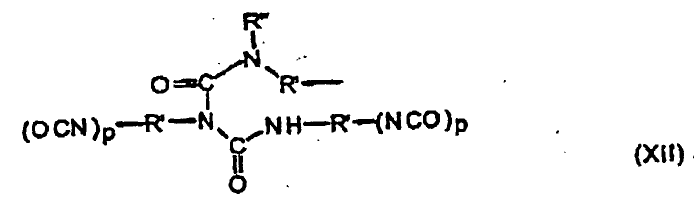 wherein R' and p are as defined in claim 16,
R" denotes H or a hydrocarbon group,
R₂ denotes the group R with the OH groups optionally substituted by a group selected from among CONHX₁H, a group of formula VI, a group of formula - CO-NH-(group of formula IV), -CO-NH-(group of formula XI) and -CO-NH-(group of formula XII) provided that the compounds comprise at least one carbamate group of formula NX₁H, respectively CONHX₁H and/or allophanate of formula V, respectively -CO-NH- (group of formula V) and at least one group selected from among the uretidine dione group of general formula IV, respectively -CO-NH-(group of general formula IV), an isocyanurate group of general formula XI, respectively -CO-NH-(group of general formula XI) and a biuret group of general formula XII, respectively -CO-NH-(group of general formula XII).

34. Compounds according to claim 32 or claim 33 wherein p is equal to 1, comprising 1, 2, 3 or 4 allophanate groups.

35. Compounds according to claim 32 or claim 33, **characterised in that** R' is a group selected from among a (CH₂)ₙ group where n varies from 2 to 8, optionally substituted by a hydrocarbon chain optionally carrying an isocyanate function, a norbornylmethylene, cyclohexylmethylene and 3,3,5-trimethylcyclohexyl-methylene group.

36. Use of a composition according to claim 29 or 30, for preparing a polyurethane coating.

37. Composition for simultaneous or sequential application comprising:
- at least one polyisocyanate composition comprising at least one dimeric uretidine-dione isocyanate and at least one compound having a biuret function, the ratio of true dimeric motifs(corresponding to formula X)/total of the isocyanate functions in said composition being less than or equal to 30% (mass/mass), advantageously less than 15%, preferably less than 12% (mass/mass), and
- a polyol.

38. Composition according to claim 37, **characterised in that** the polyol is an acrylate-type polyol which meets the following conditions for a dry extract (DE) of between 75-80% by weight:
Mw (mean molecular weight, by weight) not more than 10,000, advantageously not more than 5,000, preferably not more than 2,000;
Mn (mean molecular weight, by number) not more than 5,000, advantageously not more than 3,000, preferably not more than 800;
Mw/Mn (dispersity ratio) not more than 5, advantageously not more than 3, preferably not more than 2;
OH number/molecule greater than or equal to 2, advantageously greater than 2.

39. Composition according to claim 37, **characterised in that** the polyol is a polyester-type polyol having 10C% dry extract and a viscosity of not more than 10,000 mPa.s, advantageously not more than 5,000 mPa.s, preferably not more than 1,000 Pa.s, and an Mw of between 250 and 8,000.

40. Composition according to one of claims 37 to 39 comprising an optionally latent cross-linking catalyst.

## Patentansprüche

1. Verfahren zur Herstellung einer mindestens ein Isocyanatdimer mit Uretidindion-Grundeinheiten umfassenden Polyisocyanat-Zusammensetzung aus monomeren Ausgangsisocyanaten, in welchen die Isocyanatfunktionen von sp³-Kohlenstoffatomen getragen werden, **dadurch gekennzeichnet, dass** das Ausgangsreaktionsmedium ohne einen Dimerisationskatalysator höchstens 24 Stunden lang bei einer Temperatur von mindestens 50°C und höchstens 200°C erhitzt wird.

2. Verfahren nach Anspruch 1, **dadurch gekennzeichnet, dass** das Ausgangsreaktionsmedium bei einer Temperatur von mindestens 80°C, vorzugsweise mindestens 120°C, und höchstens 170°C erhitzt wird.

3. Verfahren nach Anspruch 1 oder 2, **dadurch gekennzeichnet, dass** das Reaktionsmedium mit einem abnehmenden Temperaturgradienten erhitzt wird.

4. Verfahren nach einem der vorhergehenden Ansprüche, **dadurch gekennzeichnet, dass** die Erhitzungsdauer mindestens 5 Minuten, vorzugsweise mindestens 30 Minuten, und höchstens 24 Stunden, vorzugsweise höchstens 5 Stunden, beträgt.

5. Verfahren nach einem der vorhergehenden Ansprüche, **dadurch gekennzeichnet, dass** am Ende der Dimerisationsreaktion das Ausgangsmonomer, insbesondere durch Destillation, entfernt wird.

6. Verfahren nach einem der Ansprüche 1 bis 4 zur kontinuierlichen Herstellung einer Zusammensetzung, die mindestens ein Isocyanatdimer.mit Uretidindion-Grundeinheiten umfasst, **dadurch gekennzeichnet, dass** nach der Dimerisationsreaktion die Monomeren, die nicht umgesetzt worden sind, abgezogen und in die Dimerisationsstufe zurückgeleitet werden.

7. Verfahren zur Herstellung einer Zusammensetzung aus polyfunktionellen Isocyanaten, die mindestens ein Isocyanattrimer mit Isocyanuratgrundeinheiten und/oder Biuretgrundeinheiten und mindestens ein Isocyanatdimer mit Uretidindion-Grundeinheiten umfasst, aus monomeren Ausgangsisocyanaten, in welchen die Isocyanatfunktionen von sp³-Kohlenstoffatomen getragen werden, und gegebenenfalls anderen Monomeren, das die Stufen:
I) weniger als 24 Stunden und vorteilhafterweise weniger als 5 Stunden.langes Erhitzen des Ausgangsreaktionsmediums ohne einen Dimerisationskatalysator bei einer Temperatur von mindestens 80°C, vorzugsweise mindestens 120°C, und höchstens 200°C, vorteilhafterweise höchstens 170°C,
II) Umsetzen des Reaktionsgemischs von Stufe I), das nicht umgesetzte Monomere enthält, mit einem (Cyclo-)Trimerisations- oder (Cyclo-) Kondensationskatalysator unter (Cyclo-) Trimerisations- oder (Cyclo-) Kondensationsbedingungen,
III) Entfernen der nicht umgesetzten Ausgangsmonomeren aus dem Reaktionsgemisch von Stufe II) und
IV) Isolieren der Zusammensetzung aus polyfunktionellen Isocyanaten mit niedriger Viskosität, die mindestens ein Isocyanattrimer und mindestens ein Isocyanatdimer umfasst,
umfasst.

8. Verfahren zur Herstellung einer Zusammensetzung aus polyfunktionellen Isocyanaten, die mindestens ein Isocyanattrimer mit Isocyanurat- und/oder Biuretgrundeinheiten und mindestens ein Isocyanatdimer mit Uretidindion-Grundeinheiten umfasst, aus monomeren Ausgangsisocyanaten, in welchen die Isocyanatfunktionen von sp³-Kohlenstoffatomen getragen werden, und gegebenenfalls anderen Monomeren, das die Stufen:
I) Umsetzen der Ausgangsmonomeren mit einem (Cyclo-) Trimerisations- oder (Cyclo-) Kondensationskatalysator unter (Cyclo-) Trimerisations- oder (Cyclo-) Kondensationsbedingungen,
II) weniger als 24 Stunden und vorteilhafterweise weniger als 5 Stunden langes Erhitzen des Reaktionsmediums von Stufe I), das nicht umgesetzte Isocyanatmonomere enthält, ohne einen Dimerisationskatalysator bei einer Temperatur von mindestens 80°C, vorzugsweise mindestens 120°C, und höchstens 200°C, vorteilhafterweise höchstens 170°C,
III) Entfernen der nicht umgesetzten Ausgangsmonomeren aus dem Reaktionsgemisch von Stufe II) und
IV) Isolieren der Zusammensetzung aus polyfunktionellen Isocyanaten mit niedriger Viskosität, die mindestens ein Isocyanattrimer und mindestens ein Isocyanatdimer umfasst,
umfasst.

9. Verfahren zur Herstellung einer Zusammensetzung aus polyfunktionellen Isocyanaten, die mindestens ein Isocyanatdimer mit Uretidindion-Grundeinheiten und mindestens eine weitere Verbindung, die eine von der Isocyanatfunktion abgeleitete Funktion besitzt, umfasst, aus Isocyanatmonomeren, in welchen die Isocyanatfunktionen von sp³-Kohlenstoffatomen getragen werden, und einer weiteren Verbindung, die mindestens eine Funktion enthält, die keine Isocyanatfunktion ist und mit der Isocyanatfunktion reaktionsfähig ist, das die Stufen:
I) weniger als 24 Stunden und vorteilhafterweise weniger als 5 Stunden langes Erhitzen des Ausgangsreaktionsmediums ohne einen Dimerisationskatalysator bei einer Temperatur von über mindestens 80°C, vorteilhafterweise mindestens 120°C, vorzugsweise mindestens 130°C und niedriger als mindestens 200°C, vorteilhafterweise mindestens 170°C,
II) Umsetzen des Reaktionsgemischs von Stufe I), das nicht umgesetzte Isocyanatmonomere umfasst, mit einer Verbindung, die mindestens eine Funktion enthält, die nicht die Isocyanatfunktion ist und mit dieser reaktionsfähig ist, gegebenenfalls in Gegenwart eines Katalysators,
III) Entfernen der Isocyanatmonomeren und gegebenenfalls der Verbindung, die mindestens eine Funktion enthält, die nicht die Isocyanatfunktion ist und mit dieser reaktionsfähig ist, aus dem Reaktionsprodukt von Stufe II) und
IV) Isolieren der Zusammensetzung aus polyfunktionellen Isocyanaten mit niedriger Viskosität, die mindestens ein Isocyanatdimer mit Uretidindion-Grundeinheiten und mindestens eine weitere von der Isocyanatfunktion abgeleitete Funktion umfassen,
umfasst.

10. Verfahren zur Herstellung einer Polyisocyanatzusammensetzung, die mindestens ein Isocyanatdimer mit Uretidindion-Grundeinheiten und mindestens eine weitere Verbindung, die eine von der Isocyanatfunktion abgeleitete Funktion besitzt, umfasst, aus Isocyanatmonomeren, in welchen die Isocyanatfunktionen von sp³-Kohlenstoffatomen getragen werden, und einer weiteren Verbindung, die mindestens eine Funktion enthält, die nicht die Isocyanatfunktion ist und mit dieser reaktionsfähig ist, das die Stufen:
I) Umsetzen eines Isocyanatmonomers mit einer Verbindung, die mindestens eine Funktion enthält, die nicht die Isocyanatfunktion ist und mit dieser reaktionsfähig ist, gegebenenfalls in Gegenwart eines Katalysators,
II) weniger als 24 Stunden und vorteilhafterweise weniger als 5 Stunden langes Erhitzen des Reaktionsmediums von Stufe I), das nicht umgesetzte Isocyanatmonomere enthält, ohne einen Dimerisationskatalysator bei einer Temperatur von über mindestens 80°C, vorteilhafterweise mindestens 120°C, vorzugsweise mindestens 130°C und niedriger als mindestens 200°C, vorteilhafterweise mindestens 170°C,
III) Entfernen der Monomeren und gegebenenfalls der Verbindung, die mindestens eine Funktion enthält, die nicht die Isocyanatfunktion ist und mit dieser reaktionsfähig ist, aus dem Reaktionsgemisch von Stufe II) und
IV) Isolieren der Polyisocyanatzusammensetzung mit niedriger Viskosität, die mindestens ein Polyisocyanattrimer und mindestens ein Polyisocyanatdimer umfasst, umfasst.

11. Verfahren nach einem der Ansprüche 7 bis 10, **dadurch gekennzeichnet, dass** das Isocyanatdimer erhalten wird, indem das Reaktionsmedium mit einem abnehmenden Temperaturgradienten erhitzt wird.

12. Verfahren nach Anspruch 9 oder 10, **dadurch gekennzeichnet, dass** die von der Isocyanatfunktion abgeleitete Funktion eine Carbamat-, Allophanat-, Harnstoff-, Biuret- und/oder maskierte Isocyanatfunktion ist.

13. Verfahren nach Anspruch 9 zur Herstellung einer Zusammensetzung aus polyfunktionellen Isocyanaten, die mindestens ein Uretidindionisocyanat-Dimer und mindestens eine eine Biuret-Funktion besitzende Verbindung umfasst, das die Umsetzung von Isocyanatmonomeren mit Wasser in Stufe II) umfasst.

14. Verfahren nach Anspruch 10 zur Herstellung einer Zusammensetzung aus polyfunktionellen Isocyanaten, die mindestens ein Uretidindionisocyanat-Dimer und mindestens eine Verbindung, die eine Biuret-Funktion besitzt, umfasst, welches die Umsetzung von Isocyanatmonomeren mit Wasser in Stufe I) umfasst.

15. Verfahren nach einem der Vorhergehenden Ansprüche, **dadurch gekennzeichnet, dass** für die Dimerisation der Ausgangsmonomeren zu dem Reaktionsmedium, das die Ausgangsmonomeren enthält, eine Verbindung mit der allgemeinen Formel I 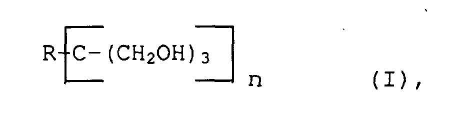 in welcher
R eine ein- oder n-wertige Kohlenwasserstoffgruppe mit 1 bis 30 Kohlenstoffatomen, deren Kohlenwasserstoffkette von einem oder mehreren Chalkogenatomen unterbrochen sein und 1 bis 3 OH-Gruppen tragen kann, und n eine ganze Zahl von 1 bis 3 bedeutet,
und/oder Produkte, die aus dieser Verbindung durch Umsetzung mit einer eine aliphatische Isocyanatfunktion tragenden Verbindung erhalten worden sind, zugegeben wird/werden.

16. Verfahren nach Anspruch 15, **dadurch gekennzeichnet, dass** die Produkte, die aus der Umsetzung der Verbindung mit der allgemeinen Formel I mit einer Verbindung, die eine aliphatische Isocyanatfunktion trägt, erhalten werden, besitzen die allgemeinen Formeln II und/oder III 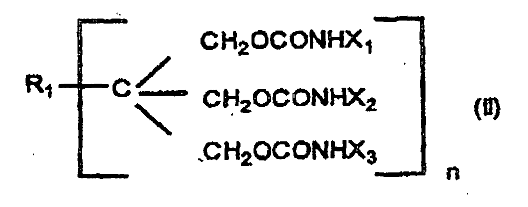 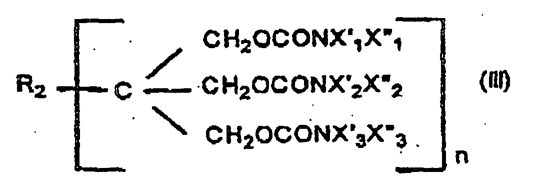 in welchen
ein oder mehrere von X₁, X₂ und X₃ eine R'(-N=C=O)ₚ-Gruppe bedeuten, in welcher R' eine p-wertige aliphatische Gruppe und p eine ganze Zahl von 0 bis 5 bedeutet, und die anderen gegebenenfalls eine Gruppe bedeuten mit der Formel 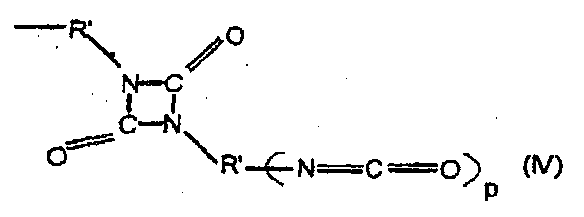 worin R' und p wie zuvor definiert sind,
R₁ R bedeutet, dessen OH-Gruppen gegebenenfalls durch eine CONX₁H-Gruppe substituiert sind, und X₁ wie zuvor definiert ist, und
mindestens einer von NX'₁X"₁, NX'₂X''₂ und NX'₃X''₃ die Gruppe bedeutet 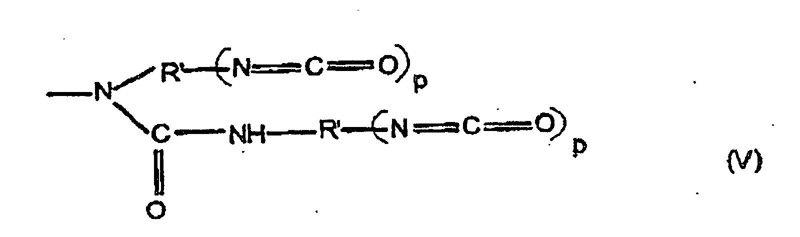 worin R' und p wie zuvor definiert sind, die anderen eine NX₁H- oder NX₁-Silyl-Gruppe bedeuten, mit X₁ wie zuvor definiert, und
R₂ R, dessen OH-Gruppen gegebenenfalls durch eine CONX₁H-Gruppe substituiert sind, oder 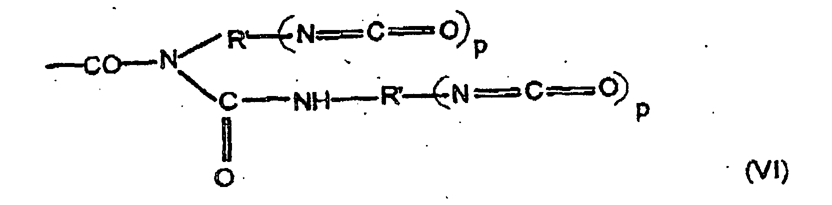 worin R' und p wie zuvor definiert sind und
n eine ganze Zahl von 1 bis 3 bedeutet, bedeutet.

17. Verfahren nach Anspruch 15 oder 16, **dadurch gekennzeichnet, dass** R eine mit 1 bis 3 OH-Gruppen substituierte C₁- bis C₄-Alkylgruppe bedeutet.

18. Verfahren nach einem der Ansprüche 15 bis 17, **dadurch gekennzeichnet, dass** die Verbindung mit der allgemeinen Formel I aus Pentaerythrit und Trimethylolpropan ausgewählt ist und die Verbindungen mit der allgemeinen Formel II und III gegebenenfalls aus den entsprechenden Derivaten des Pentaerythrits und Trimethylolpropans, wie in Anspruch 16 definiert, ausgewählt sind.

19. Verfahren nach einem der vorhergehenden Ansprüche, **dadurch gekennzeichnet, dass** die monomeren Ausgangsisocyanate Diisocyanate sind, die aus Hexamethylendiisocyanat, Tetramethylendiisocyanat, Norbornandimethylendiisocyanat, Isophorondiisocyanat, Bis-isocyanato-cyclohexylmethan und 2-Methylpentamethylendiisocyanat ausgewählt sind.

20. Verwendung einer Verbindung mit der allgemeinen Formel I 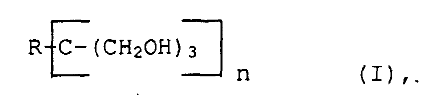 in welcher
R eine ein- oder n-wertige Kohlenwasserstoffgruppe mit 1 bis 30 Kohlenstoffatomen, deren Kohlenwasserstoffkette durch ein oder mehrere Chalkogenatome unterbrochen und 1 bis 3 OH-Gruppen tragen kann, und n eine ganze Zahl von 1 bis 3 bedeutet, und/oder von Produkten, die aus diesem Derivat durch Umsetzung mit einer eine aliphatische Isocyanatfunktion tragenden Verbindung erhalten worden sind, zur Herstellung von Isocyanatdimeren mit der Formel (X) 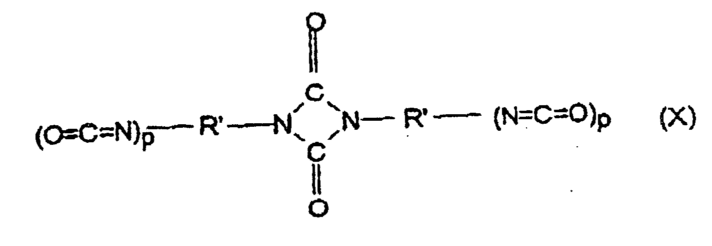 in welcher
R' eine aliphatische Kohlenwasserstoffkette mit 3 bis 30 Kohlenstoffatomen und mit einer Wertigkeit von p + 1 und p eine ganze Zahl von 0 bis 5 bedeutet, aus aliphatischen Isocyanatmonomeren mit der Formel (VII) R'-(N=C=O)ₚ₊₁ₘ,
worin R' und p wie zuvor definiert sind,
mit einem Umwandlungsgrad von mindestens 5 % und vorzugsweise mindestens 10 % der Ausgangsisocyanatfunktionen in Uretidindion-Funktionen, wobei das Verhältnis von echten Dimergrundeinheiten (entsprechend Formel X)/alle Isocyanatfunktionen kleiner als oder gleich 30 % (Masse/Masse), vorteilhafterweise kleiner als 15 %, und vorzugsweise kleiner als 12 % (Masse/Masse) ist.

21. Verwendung nach Anspruch 20, **dadurch gekennzeichnet, dass** die Produkte, die aus der Umsetzung der Verbindung mit der allgemeinen Formel I mit einer Verbindung, die eine aliphatische Isocyanatfunktion trägt, erhalten werden, besitzen die allgemeine Formel II und/oder III 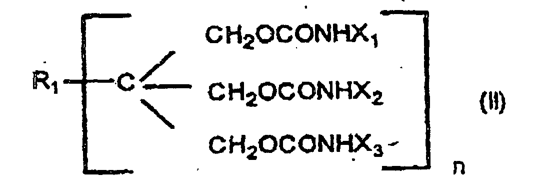 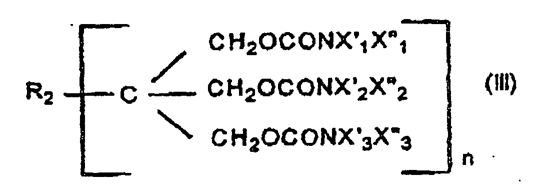 in welchen
ein oder mehrere von X₁, X₂ und X₃ eine R'-(N=C=O)ₚ-Gruppe bedeuten, in welcher R' eine p-wertige aliphatische Gruppe und p eine ganze Zahl von 0 bis 5 bedeutet, und die anderen gegebenenfalls eine Gruppe bedeuten mit der Formel 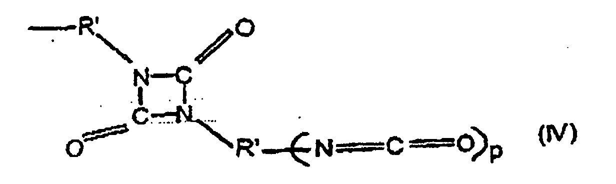 worin R' und p wie zuvor definiert sind,
R₁ R bedeutet, dessen OH-Gruppen gegebenenfalls durch eine CONX₁H-Gruppe substituiert sind, und X₁ wie weiter oben definiert ist, und
mindestens einer von NX'₁X''₁, NX'₂X"₂ und NX'₃X''₃ die Gruppe bedeutet. 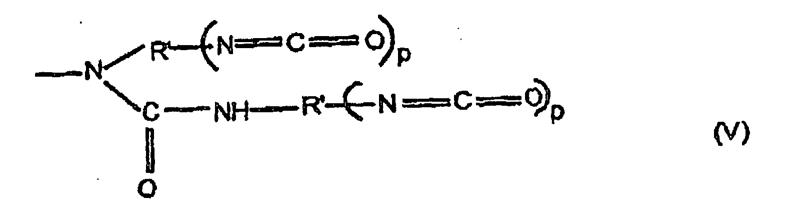 worin R' und p wie zuvor definiert sind, die anderen eine NX₁H- oder NX₁-Silyl-Gruppe bedeuten, mit X₁ wie weiter oben definiert, und
R₂ R, dessen OH-Gruppen gegebenenfalls durch eine CONX₁H-Gruppe substituiert sind, oder 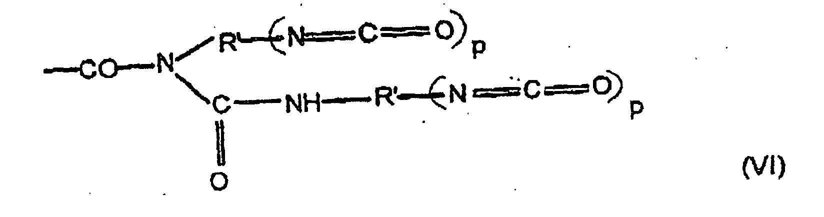 worin R' und p wie weiter oben definiert sind und n eine ganze Zahl von 1 bis 3 bedeutet, bedeutet, für die Herstellung von dimeren Verbindungen mit der allgemeinen Formel X: 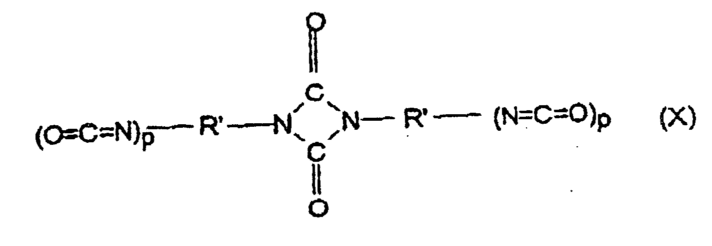 in welcher R' und p wie in Anspruch 20 definiert sind, aus Isocyanatmonomeren mit der allgemeinen Formel VII
R'-(N=C=O)ₚ₊₁ (VIII),
worin R' und p wie weiter oben definiert sind, mit einem Umwandlungsgrad von vorteilhafterweise 5 % und vorzugsweise mindestens 10 % der Isocyanatfunktionen in Verbindungen mit der Formel X.

22. Verwendung nach Anspruch 20 oder 21, **dadurch gekennzeichnet, dass** R eine mit 1 bis 3 OH-Gruppen substituierte C₁- bis C₄-Alkylgruppe bedeutet.

23. Verwendung nach Anspruch 21, **dadurch gekennzeichnet, dass** die Verbindung mit der allgemeinen Formel I aus Pentaerythrit und Trimethylolpropan ausgewählt ist, und die Verbindungen mit der allgemeinen Formel II und III gegebenenfalls aus den entsprechenden Derivaten des Pentaerythrits und Trimethylolpropans, wie in Anspruch 21 definiert, ausgewählt sind.

24. Verwendung nach Anspruch 21, **dadurch gekennzeichnet, dass** die Umsetzung zur Herstellung der Verbindungen mit der allgemeinen Formel X aus Verbindungen mit der allgemeinen Formel VII in einem Reaktionsmedium durchgeführt wird, das außerdem enthält Verbindungen mit der allgemeinen Formel VIII 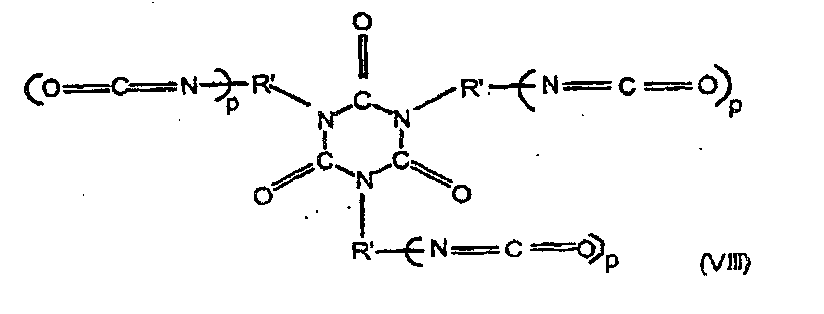 in welcher R' und p wie in Anspruch 21 definiert sind.

25. Verwendung nach Anspruch 21, **dadurch gekennzeichnet, dass** die Verbindung mit der allgemeinen Formel I und/oder II und/oder III auf einem Träger, insbesondere einem Harz, fixiert ist.

26. Zusammensetzung aus polyfunktionellen Isocyanaten, die mindestens ein Uretidindionisocyanat-Dimer und mindestens eine eine Biuretfunktion besitzende Verbindung umfasst, **dadurch gekennzeichnet, dass** die eine Biuretfunktion besitzende Verbindung mindestens 3 Gew.%, vorteilhafterweise mindestens 10 Gew.%, und vorzugsweise mindestens 20 Gew.% der Zusammensetzung ausmacht, wobei das Verhältnis von echten Dimer-Grundeinheiten (entsprechend Formel X)/alle Isocyanatfunktionen kleiner als oder gleich 30 % (Masse/Masse), vorteilhafterweise kleiner als 15 %, und vorzugsweise kleiner als 12 % (Masse/Masse) ist.

27. Zusammensetzung nach Anspruch 26, in welcher das Verhältnis von echten Dimer-Grundeinheiten (entsprechend Formel X)/alle Isocyanatfunktionen größer als 3,5 % und vorteilhafterweise größer als 5 % bei den Isocyanuraten ist.

28. Zusammensetzung nach Anspruch 27, in welcher das Verhältnis von echten Dimer-Grundeinheiten (entsprechend Formel X)/alle Isocyanatfunktionen größer als 5 % ist, wenn die Zusammensetzung ein Isocyanurat enthält.

29. Zusammensetzung, die mindestens eine Verbindung mit der allgemeinen Formel X 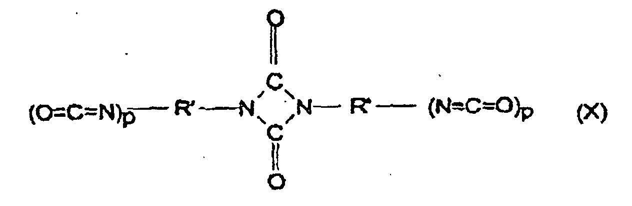 in welcher R' und p wie in Anspruch 21 definiert sind, und mindestens eine Verbindung mit der allgemeinen Formel II 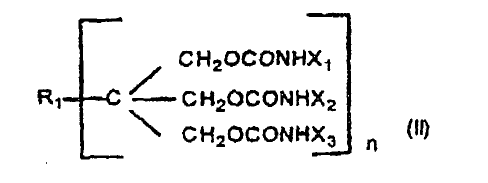 in welcher ein oder mehrere von X₁, X₂ und X₃ eine - R'-N=C=O-Gruppe wie weiter oben definiert bedeuten und die anderen gegebenenfalls bedeuten eine Gruppe 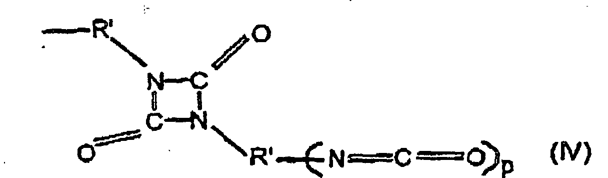 worin R' und p wie weiter oben definiert sind und
R₁ R bedeutet, wobei die OH-Gruppen gegebenenfalls durch eine CONX₁H-Gruppe wie weiter oben definiert substituiert sind, und
n eine ganze Zahl von 1 bis 3 bedeutet,
und/oder mindestens eine Verbindung mit der allgemeinen Formel III 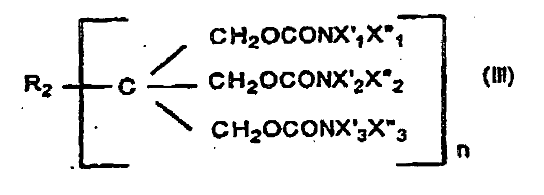 in welcher mindestens einer von NX'₁X''₁, NX'₂X''₂ und NX'₃X''₃ die Gruppe bedeutet 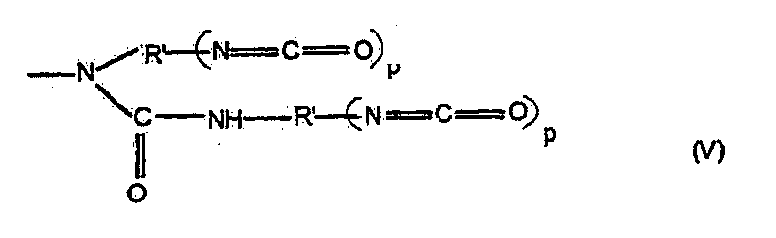 worin R' und p wie zuvor definiert sind und die anderen eine NX₁H-Gruppe, mit X₁ wie weiter oben definiert, bedeuten, und
R₂ R, mit den OH-Gruppen durch eine CONX₁H-Gruppe substituiert, oder 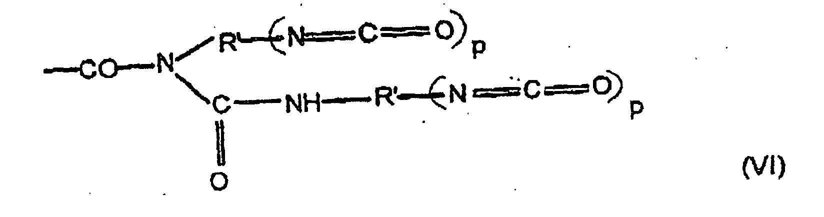 wie weiter oben definiert, und
n eine ganze Zahl von 1 bis 3 bedeutet,
und/oder eine Biuret-Verbindung, die aus einem Isocyanat mit der allgemeinen Formel VI wie in Anspruch 21 definiert erhalten ist, umfasst, wobei die Zusammensetzung außerdem **dadurch gekennzeichnet ist, dass** sie keinen Dimerisierungskatalysator vom Typ Phosphin, Aminopyridin, Phosphoramid, metallorganische Verbindung und tertiäres Amin enthält.

30. Zusammensetzung nach Anspruch 29, **dadurch gekennzeichnet, dass** sie außerdem eine Verbindung mit der allgemeinen Formel VIII 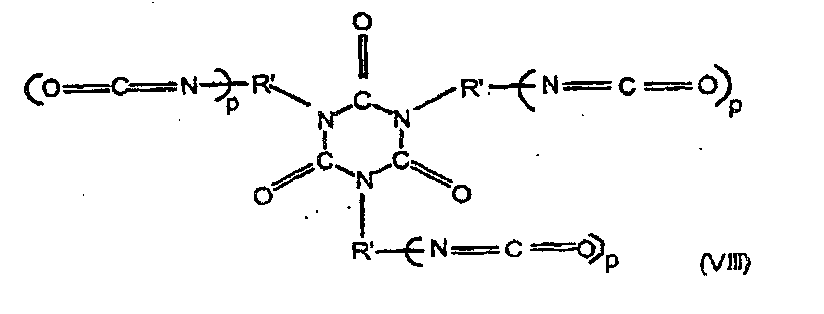 worin
R' und p wie in Anspruch 21 definiert sind, und/oder eine Verbindung mit der allgemeinen Formel XIII 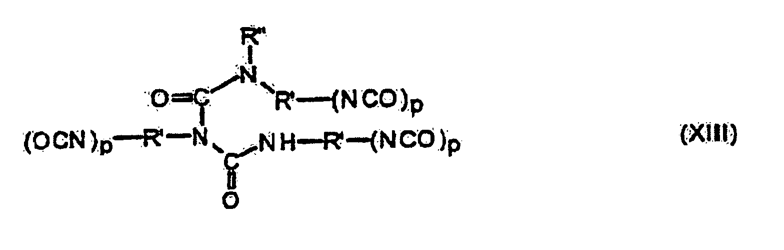 in welcher R'' H oder eine Kohlenwasserstoffgruppe bedeutet und R' und p wie zuvor definiert sind, enthält.

31. Zusammensetzung, die mindestens eine Verbindung mit der allgemeinen Formel X wie in Anspruch 29 definiert und/oder gegebenenfalls eine Verbindung mit der allgemeinen Formel VIII wie in Anspruch 30 definiert und/oder mindestens eine Verbindung mit der allgemeinen Formel XIII wie in Anspruch 24 definiert umfasst, wobei die Zusammensetzung frei von Dimerisationskatalysatoren ist.

32. Verbindung mit der allgemeinen Formel III, wie in Anspruch 16 definiert, in welcher mindestens eine der Gruppen NX₁'X₁'', NX₂'X₂'' und NX₃'X₃" die Gruppe mit der Formel V wie weiter oben definiert bedeutet und die anderen eine NX₁H-Gruppe mit X₁, X₁'X₁'', X₂'X₂", X₃'X₃" wie in Anspruch 16 definiert bedeuten und R₁ wie in Anspruch 16 definiert ist, nämlich eine Gruppe R bedeutet, wobei die OH-Gruppen gegebenenfalls durch eine CO-NX₁H-Gruppe oder eine Gruppe mit der Formel V, wie in Anspruch 16 definiert, substituiert sind.

33. Verbindung mit der allgemeinen Formel III wie in Anspruch 16 definiert, in welcher
- die Gruppen NX'₁X''₁, NX'₂X''₂ und NX'₃X''₃ ausgewählt sind aus einer Gruppe mit der allgemeinen Formel NX₁H, einer Gruppe mit der allgemeinen Formel V wie weiter oben definiert, einer Uretidindion-Gruppe mit der Formel IV, einer Isocyanuratgruppe mit der Formel XI 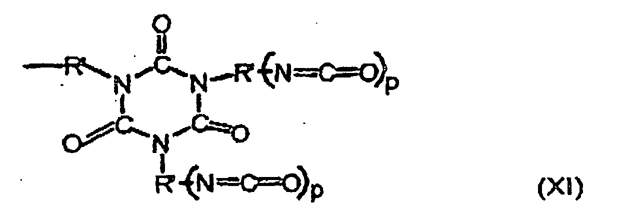
worin R' und p wie in Anspruch 16 definiert sind, und einer Biuretgruppe mit der Formel XII 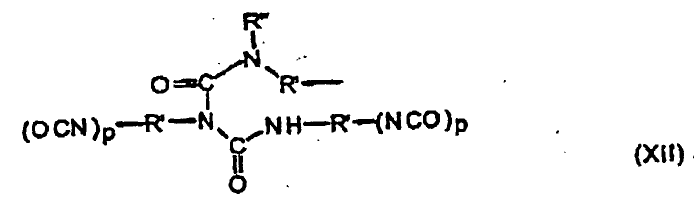 worin R' und p wie in Anspruch 16 definiert sind, R" H oder eine Kohlenwasserstoffgruppe bedeutet und
R₂ die Gruppe R bedeutet, wobei die OH-Gruppen gegebenenfalls durch eine Gruppe substituiert.sind, die aus CONHX₁H, einer Gruppe mit der Formel VI, einer Gruppe mit der Formel -CO-NH- (Gruppe mit der Formel IV), -CO-NH- (Gruppe mit der Formel XI) und - CO-NH- (Gruppe mit der Formel XII) ausgewählt ist, unter der Voraussetzung, dass die Verbindungen mindestens eine Carbamatgruppe mit der Formel NX₁H, bzw. CONHX₁H und/oder Allophanatgruppe mit der Formel V bzw. -CO-H- (Gruppe mit der Formel V) und mindestens eine Gruppe enthalten, die aus der Uretidindion-Gruppe mit der allgemeinen Formel IV bzw. -CO-NH- (Gruppe mit der allgemeinen Formel IV) einer Isocyanuratgruppe mit der allgemeinen Formel XI bzw. -CO-NH- (Gruppe mit der allgemeinen Formel XI) und einer Biuretgruppe mit der allgemeinen Formel XII bzw. -CO-NH (Gruppe mit der allgemeinen Formel XII) ausgewählt ist.

34. Verbindungen nach Anspruch 32 oder 33, in welchen p gleich 1 ist und welche 1, 2, 3 oder 4 Allophanatgruppen enthalten.

35. Verbindungen nach Anspruch 32 oder 33, **dadurch gekennzeichnet, dass** R' eine Gruppe bedeutet, die aus einer (CH₂)ₙ-Gruppe, wobei n von 2 bis 8 variiert, die gegebenenfalls durch eine Kohlenwasserkette substituiert ist, die gegebenenfalls eine Isocyanatfunktion trägt, einer Norbornylmethylen-, Cyclohexylmethylen- und 3,3,5-Trimethylcyclohexylmethylengruppe ausgewählt ist.

36. Verwendung einer Zusammensetzung nach Anspruch 29 oder 30 zur Herstellung einer Polyurethanbeschichtung.

37. Zusammensetzung zum gleichzeitigen oder aufeinander folgenden Aufbringen, die
- mindestens eine Polyisocyanatzusammensetzung, die mindestens ein Uretidindionisocyanat-Dimer und mindestens eine eine Biuretfunktion besitzende Verbindung umfasst und in welcher das Verhältnis von echten Dimer-Grundeinheiten (entsprechend der Formel X)/alle Isocyanatfunktionen kleiner als oder gleich 30 % (Masse/Masse), vorteilhafterweise kleiner als 15 %, und vorzugsweise kleiner als 12 % (Masse/Masse) ist, und
- ein Polyol
umfasst.

38. Zusammensetzung nach Anspruch 37, **dadurch gekennzeichnet, dass** das Polyol ein'Polyol vom Typ Acrylat ist, das folgende Bedingungen für einen Festkörpergehalt (TS) von 75 bis 80 Gew.% erfüllt:
- M_{w} (Gewichtsmittel des Molekulargewichts) nicht höher als 10 000, vorteilhafterweise nicht höher als 5 000, und vorzugsweise nicht höher als 2 000,
- Mₙ (Zahlenmittel des Molekulargewichts) nicht höher als 5 000, vorteilhafterweise nicht höher als 3 000, und vorzugsweise nicht höher als 800,
- M_{w}/Mₙ (Polymolekularitätsindex) nicht größer als 5, vorteilhafterweise nicht größer als 3, und vorzugsweise nicht größer 2 und
- Anzahl OH/Molekül größer als oder gleich 2 und vorteilhafterweise größer als 2.

39. Zusammensetzung nach Anspruch 37, **dadurch gekennzeichnet, dass** das Polyol ein Polyol vom Typ Polyester mit 100 % Festkörpergehalt und einer Viskosität von nicht höher als 10 000 mPa·s, vorteilhafterweise nicht höher als 5 000 mPa·s, und vorzugsweise nicht höher als 1 000 mPa·s und einem M_{w} von 250 bis 8 000 ist.

40. Zusammensetzung nach einem der Ansprüche 37 bis 39, die einen gegebenenfalls latenten Vernetzungskatalysator enthält.
